(19) Europäisches Patentamt
European Patent Office
Office européen des brevets

(11) **EP 3 560 009 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(21) Anmeldenummer: **17823106.4**

(22) Anmeldetag: **19.12.2017**

(51) Int Cl.:
*H01M 10/0585* (2010.01)   *H01M 4/13* (2010.01)
*H01M 10/052* (2010.01)   *H01M 10/0569* (2010.01)
*H01M 50/409* (2021.01)   *H01M 50/431* (2021.01)
*H01M 50/46* (2021.01)   *H01M 4/02* (2006.01)
*H01M 4/04* (2006.01)   *H01M 4/133* (2010.01)
*H01M 4/587* (2010.01)   *H01M 4/62* (2006.01)
*H01M 4/66* (2006.01)   *H01M 4/80* (2006.01)

(86) Internationale Anmeldenummer:
**PCT/EP2017/083659**

(87) Internationale Veröffentlichungsnummer:
**WO 2018/115024 (28.06.2018 Gazette 2018/26)**

(54) **ELEKTRODE-SEPARATOR-ELEMENT MIT EINER KERAMISCHEN SEPARATORSCHICHT**

SEPARATOR-ELECTRODE-UNIT WITH A CERAMIC SEPARATOR

UNITÉ-ÉLECTRODE-SÉPARATEUR AVEC UN SÉPARATEUR EN CÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2016 DE 102016125177**

(43) Veröffentlichungstag der Anmeldung:
**30.10.2019 Patentblatt 2019/44**

(73) Patentinhaber: **High Performance Battery Technology GmbH**
**53113 Bonn (DE)**

(72) Erfinder:
• **HAMBITZER, Günther**
**53113 Bonn (DE)**

• **MATERN, Wolfgang**
**47443 Moers (DE)**

(74) Vertreter: **Keenway Patentanwälte Neumann Heine Taruttis**
**PartG mbB**
**Postfach 10 33 63**
**40024 Düsseldorf (DE)**

(56) Entgegenhaltungen:
**EP-A1- 2 360 772**   **DE-A1- 10 347 570**
**DE-A1-102013 112 385**   **US-A- 4 362 794**
**US-A1- 2008 241 674**   **US-A1- 2009 181 292**
**US-A1- 2013 189 566**

**Beschreibung**

TECHNISCHES GEBIET

Die Erfindung betrifft ein Elektrode-Separator-Element mit einer Elektrode, auf die mindestens eine keramische Separatorschicht aufgebracht ist, wobei die Elektrode zusammen mit der keramischen Separatorschicht eine hohe Oberflächengüte aufweist. Weiterhin betrifft die Erfindung eine nicht-wässrige wiederaufladbare elektrochemische Batteriezelle mit mindestens einem Elektrode-Separator-Element und einem Elektrolyt.

Auf vielen technischen Gebieten haben wiederaufladbare elektrochemische Batteriezellen eine zunehmende Bedeutung. So gibt es im Rahmen der Energiewende einen erhöhten Bedarf an Batteriezellen für stationäre Anwendungen, wie Netzstabilisierung oder auch Netzpufferung und für die dezentrale Energieversorgung. Aber auch bei mobilen Anwendungen spielen wiederaufladbare elektrochemische Batteriezellen eine wichtige Rolle.

Es besteht demnach ein hohes Bedürfnis nach verbesserten wiederaufladbaren elektrochemischen Batteriezellen, die insbesondere folgende Anforderungen erfüllen:

-    Sicherheit, auch unter erschwerten Umweltbedingungen, wie in einem Fahrzeug.

-    Sehr gute elektrische Leistungsdaten, insbesondere hohe Energiedichte bei gleichzeitig hohen entnehmbaren Strömen, also hoher Leistungsdichte.

-    Hohe Lebensdauer, insbesondere hohe Zahl nutzbarer Lade- und Entladezyklen.

-    Möglichst geringer Preis, d.h. kostengünstige Materialien und möglichst einfache Produktionsverfahren.

Eine weitere für die Praxis wichtige Anforderung ist z. B. die Tiefentladefähigkeit. So ist gerade für eine hohe Zahl von Zellen, die seriell zu Batterien verschaltet werden, eine Entladefähigkeit jeder einzelnen Zelle auf 0V [Volt] wünschenswert. Dies ist bei den heutigen organischen Lithium-Ionen-Zellen in der Praxis nicht möglich, da diese bei einer Entladung unter 2,7V [Volt] irreversibel geschädigt werden.

STAND DER TECHNIK

Die genannten Anforderungen werden durch eine Batteriezelle erreicht, bei der die aktiven Kationen, die beim Laden der Batteriezelle an der negativen Elektrode durch Einlagerung in ein Wirtsgitter (Interkalation bzw. Insertion) oder durch Legierungsbildung oder durch Abscheidung als Metall reagieren, aus der Alkalimetall-, Erdalkalimetallgruppe oder aus der zweiten Nebengruppe des Periodensystems stammen. Lithium ist besonders bevorzugt. Aus den Gruppen dieser Kationen können auch Metalldithionite gebildet werden, insofern sie nicht elektronisch leitfähig sind.

In großem Umfang werden wiederaufladbare Batteriezellen auch für mobile Anwendungen eingesetzt, wie z. B. Mobiltelefone, Laptops, oder auch zunehmend für Elektrofahrzeuge. Insbesondere hierfür ist möglichst viel elektrische Energie pro Gewichts- und Volumeneinheit wichtig. In dieser Hinsicht ist Lithium als aktives Kation oder aktives Metall besonders vorteilhaft.

Wiederaufladbare elektrochemische Batteriezellen sind daher häufig Lithium-Ionen-Zellen, d.h. in diesen Batteriezellen ist Lithium das aktive Metall. In an sich bekannter Weise wandern beim Aufladen einer solchen Batteriezelle die Ionen des aktiven Metalls von der positiven Elektrode zur negativen Elektrode und lagern sich typischerweise in die negative Elektrode ein, d.h. sie interkalieren bzw. insertieren in das Material der negativen Elektrode. Die negative Elektrode ist entsprechend ausgestaltet, d.h. die negative Elektrode umfasst ein Interkalations- bzw. Insertionsmaterial, so dass die Ionen des aktiven Metalls (Lithium) interkalieren bzw. insertieren können. Beim Entladevorgang läuft im Wesentlichen der entsprechende umgekehrte Vorgang ab, das heißt die Lithium-Ionen (Li$^+$) wandern von der negativen zur positiven Elektrode. Der Transport der Lithium-Ionen zwischen den Elektroden findet dabei mittels eines Elektrolyts statt, der die notwendige Beweglichkeit der Lithium-Ionen gewährleistet.

Nachfolgend wird ohne Beschränkung der Allgemeinheit auf Lithium als Kation, das an der negativen Elektrode reagiert, Bezug genommen.

Herkömmliche elektrochemische Batteriezellen wie beispielsweise Lithium-Ionen-Zellen enthalten einen Elektrolyten, der aus einem in organischem Lösungsmittel oder Lösungsmittelgemisch (z. B. auf Basis von Ethylencarbonat) gelösten Lithiumsalz (z. B. LiPF$_6$) besteht. Sie werden nachfolgend auch als "organische Batteriezellen" bzw. "organische Lithium-Ionen-Zellen" bezeichnet.

Ferner kann ein Elektrolyt, welcher Schwefeldioxid (SO$_2$) enthält, statt eines organischen Elektrolyten verwendet werden. Als "SO$_2$-haltiger Elektrolyt" wird demnach ein Elektrolyt bezeichnet, der SO$_2$ oder Reaktionsprodukte des SO$_2$ nicht nur als Zusatz in geringer Konzentration enthält, sondern bei dem die Beweglichkeit der Ionen, die den Ladungstransport bewirken, zumindest teilweise durch das $SO_2$ oder durch die Reaktionsprodukte des $SO_2$ gewährleistet ist. Im Fall der aktiven Kationen aus der Gruppe der Alkalimetalle wird vorzugsweise Tetrahalogenoaluminat als Anion für das Leitsalz im Elektrolyt verwendet. Für das aktive Lithium-Kation wird vorzugsweise Lithiumtetrachloroaluminat als Leitsalz eingesetzt. Ohne Beschränkung der Allgemeinheit werden im Folgenden elektrochemische Batteriezellen mit einem $SO_2$-haltigen Elektrolyten und mit Lithium als aktivem Kation beschrieben.

Die DE 10 2013 112 385 offenbart eine wiederaufladbare nichtwässrige elektrochemische

Batteriezelle, die eine negative und eine positive Elektrode sowie einen schwefeldioxidhaltigen Elektrolyten aufweist.

Die EP 2 360 772 offenbart ebenso eine elektrochemische wiederaufladbare Batteriezelle mit einer positiven und einer negativen Elektrode sowie einem schwefeldioxidhaltigen Elektrolyten und einem Leitz als des aktiven Metalls der Zelle.

Die US 2013/0189566 schreibt ebenfalls eine wiederaufladbare Lithium Batteriezelle mit einem Gehäuse, einer positiven und einer negativen Elektrode sowie einem Elektrolyten, welcher ein Leitsatz enthält und der Schwefeldioxid aufweist.

Die DE 103 47 570 beschreibt eine anorganische Separatorelektrodeneinheit für Lithium-Ionen-Batterien, wobei die Separatorelektrodeneinheit eine poröse Elektrode und eine anorganische Separatorschicht aufweist.

Die US 2008/0241674 beschreibt eine Elektrodeneinheit mit einer keramischen Schicht, die zwischen einer positiven Elektrodenplatte und einer negativen Elektrodenplatte angeordnet ist, und bei der eine Gummilage auf der keramischen Schicht platziert ist.

Die US 2009/01 81292 beschreibt einen dünnen, flexiblen porösen Keramik-Kompositfilm (PCC) Film, der als Separator für thermische Batterien eingesetzt wird.

Die US 4,36 2,794 beschreibt einen schwefeldioxidhaltigen Elektrolyten für eine wiederaufladbare, nichtwässrige Batteriezelle, die einen thionylchloridhaltigen bzw. anorganischen oxyhaliden Elektrolyten aufweist.

Bekannt sind auch Batteriezellen, die neben Schwefeldioxid bzw. durch Reaktion mit Schwefeldioxid erzeugte Substanzen andere Elektrolyte enthalten. Diese Elektrolyte können andere Leitsalze (z. B. Halogenide, Oxalate, Borate, Phosphate, Arsenate, Gallate) und andere Lösungsmittel enthalten, die die Beweglichkeit der Ionen gewährleisten. Diese Lösungsmittel können dabei anorganische Lösungsmittel, organische Lösungsmittel oder ionische Flüssigkeiten bzw. Mischungen daraus sein. Als organische Lösungsmittel kommen bevorzugt auch gesättigte Kohlenwasserstoffe in Betracht.

Der Elektrolyt kann im Wesentlichen frei von organischen Materialien sein, wobei "im Wesentlichen" dahingehend zu verstehen ist, dass die Menge eventuell vorhandener organischer Materialien so gering ist, dass sie z. B. im Hinblick auf Brennbarkeit kein bedeutendes Sicherheitsrisiko darstellen.

Eine negative Elektrode kann im Wesentlichen eine aktive Masse enthalten, in die die von der positiven Elektrode während des Ladens freigesetzten Kationen (bevorzugt Lithium-Ionen) entweder insertieren oder interkalieren bzw. mit den Kationen eine Legierung bilden. Diese können Graphit, andere Kohlenstoffe oder Silizium sein.

Ohne Beschränkung der Allgemeinheit wird im Folgenden für die aktive Masse der negativen Elektrode das bevorzugte Graphit ($C_6$) beschrieben.

Auch für die aktive Masse der positiven Elektrode kommt neben Lithiummetalloxiden und Lithiumphosphaten eine Vielzahl an Substanzen, wie Lithiumsulfid, in Frage. Ohne Beschränkung der Allgemeinheit wird im Folgenden als aktive Masse der positiven Elektrode Lithiumeisenphosphat, $LiFePO_4$ (LEP), angegeben.

Sowohl bei organischen Batteriezellen als auch bei elektrochemischen Batteriezellen mit $SO_2$-haltigen Elektrolyten ist aus Sicherheitsgründen eine metallische Abscheidung, also beispielsweise die Abscheidung von metallischem Lithium, zu vermeiden. Neben Gründen wie Produkt- oder Produktionsfehler, z. B. zu wenig aktive Masse in einer negativen Elektrode, oder Überladen der Batteriezelle, kommt es auch dann zu Sicherheitsrisiken, wenn die negativen Elektroden schneller irreversibel Kapazität verlieren als die positiven Elektroden, da dann beim Aufladevorgang ein Überschuss an Ionen entsteht, der nicht in die negative Elektrode interkalieren bzw. insertieren kann.

Diese schnellere Degradation der negativen Elektroden lässt sich sowohl für die organischen Batteriezellen (organischen Lithium-Ionen-Zellen) als auch für die Batteriezellen mit $SO_2$-haltigen Elektrolyten auf im Wesentlichen zwei unterschiedliche Ursachen zurückführen:

a) Durch Freisetzung von Schwermetallionen, im Falle des Lithiumeisenphosphats, also Eisenionen, aus der positiven Elektrode kommt es durch Metallabscheidung der Schwermetalle auf der Oberfläche bzw. in die Lithium-Ionenkanäle der negativen Elektrode, z. B. Graphit, zur Blockade für den Ein- und Austritt der Lithium-Ionen und damit um einen vielfach stärkeren irreversiblen Kapazitäts- und Leistungsverlust der negativen Elektrode als der positiven Elektrode.

Im Falle einer Lithium-Ionen-Zelle mit einem $SO_2$-haltigen Elektrolyten mit Lithiumeisenphoshat als aktive positive Masse lösen sich die Eisenionen im Wesentlichen als Eisenchlorid, welches sich aus der Reaktion des Eisenphosphats mit gelöstem Chlorwasserstoff bildet. Der Chlorwasserstoff wird einerseits möglicherweise mit der Elektrolytlösung eingebracht und/oder bildet sich aus der Reaktion von z. B. auf dem LEP der positiven Elektrode haftendem Wasser mit dem Leitsalz Lithiumtetrachloroaluminat des $SO_2$-haltigen Elektrolyten. Trockenes Lithiumeisenphosphat reagiert mit Feuchtigkeit unter Bildung von Lithiumhydroxid, Eisenchlorid und Phosphorsäure. Auch hier löst sich das Eisenchlorid im $SO_2$-haltigen Elektrolyten. Die Eisenionen wandern zur negativen Elektrode und scheiden sich dort als metallisches Eisen auf der Oberfläche der negativen Elektrode ab und blockieren die Lithium-Ionenkanäle. Das abgeschiedene Eisen verringert die Kapazität der negativen Elektrode um ein Vielfaches der abgeschiedenen Ladungsmenge. Die Wassermenge in der Batteriezelle sollte also schon bei der Produktion der Batteriezelle auch bei entsprechend verwendeten Chemikalien sehr niedrig gehalten werden. Eine nachträgliche Trocknung einer in feuchten Räumen gefertigten Batteriezelle ist insbesondere bei Zellkapazitäten größer 5 Ah aufgrund der beschränkten maximalen Temperatur wegen eines Binders, der in den Elektroden enthalten ist, praktisch nicht möglich und führt wie oben beschrieben zu Eisenionen in der Batteriezelle. Daher ist die Verwendung eines Trockenraums mit einem Taupunkt von unter -30°C [Grad Celsius], besser kleiner -40°C [Grad Celsius], bevorzugt kleiner -50°C [Grad Celsius] und besonders bevorzugt kleiner/gleich -60°C [Grad Celsius] für die Herstellung der positiven Elektrode und den Zusammenbau der Komponenten der Batteriezelle günstig. Die negative Elektrode sollte entweder durch Herstellung in einem Trockenraum oder durch Nachtrocknung vor Einbringung in den Trockenraum zum Zusammenbau der Komponenten zur Batteriezelle ebenfalls, wie alle anderen Komponenten der Batteriezelle, nahezu wasserfrei sein, d.h. einen so geringen Wassergehalt wie möglich aufweisen.

b) Die zweite Ursache liegt in der Verringerung der mit Elektrolyt befüllten Porenvolumina der negativen Elektrode. Im Falle der organischen Batteriezelle (Lithium-Ionen-Zellen, die einen organischen Elektrolyten aufweisen) wächst über die Zeit und die Zykelzahl auf der negativen Elektrode, mit z. B. Graphit als aktiver Masse, eine Polymerschicht durch Reduktion des Elektrolyten an der Graphitoberfläche. Dabei führt die zunehmend aufwachsende polymere Deckschicht auf den Oberflächen des Graphits zu einer Reduktion der Porenquerschnitte und damit der Porenvolumina. Da die ionische Leitfähigkeit der gebildeten Polymerschicht geringer ist als die des organischen Elektrolyten, folgt damit eine zunehmende Erhöhung des ionischen Innenwiderstandes der negativen Elektrode. Für die Bildung der polymeren Deckschicht wird Kapazität verbraucht. Auf Grund dessen gibt es eine direkte Korrelation zwischen Kapazitätsabnahme und Innenwiderstandserhöhung der Batteriezelle, bzw. zwischen Kapazitäts- und Leistungsverlust der Batteriezelle.

Im Falle der Batteriezelle (Lithium-Ionen-Zelle) mit $SO_2$-haltigen Elektrolyten bildet sich auf der Oberfläche der aktiven Masse (Graphit) der negativen Elektrode eine monomolekulare Schicht Lithiumdithionit. Wie in der WO 2015/067795 A1 beschrieben, reagiert das Lithiumdithionit unter ladungsverzehrender Neubildung solange ab, bis sich ein Gleichgewicht eingestellt hat. Dabei fallen entsprechend der Reaktionsgleichung die Feststoffe Lithiumsulfid und Lithiumchlorid in den Porenvolumina der negativen Elektrode aus, welches zu einer ionischen Widerstandserhöhung führt.

Aber auch während des Betriebs der Batteriezelle kann es zum Eintrag von Wasserdampf kommen und damit zu einer lokalen Degradation der negativen Elektrode. Hierfür verantwortlich sind im Wesentlichen Mikrorisse in Glasdurchführungen von Ableitelementen der Elektroden, die durch mechanische Belastungen, z. B. bei der Montage der Verkabelung, und/oder durch Vibrationen und/oder durch thermischen Stress entstehen. Hierbei können die Mikrorisse so fein sein, dass z. B. ein Ausblühen von Elektrolyt oder ein Geruch von Schwefeldioxid nicht wahrnehmbar ist. Über die Zeit diffundieren auf diese Weise beständig Schwefeldioxidmoleküle aus der Batteriezelle heraus und Wasserdampfmoleküle in das Kopfvolumen der Batteriezelle hinein und reagieren lokal mit dem Elektrolyten zu Chlorwasserstoff ab. Gelangt der Chlorwasserstoff an die positive Elektrode, so reagiert er, wie oben beschrieben, unter Auflösung von Eisenionen ab. Gelangt er an die negative Elektrode, so kann das Proton als Lewissäure gemäß den bekannten Reaktionen mit Lithiumthiosulfat und Lithiumdithionit unter Bildung von Feststoffen weiter reagieren.

Wird die Batteriezelle z. B. zum ersten Mal geladen, so finden die ersten elektrochemischen Reaktionen auf Grund der strombedingten Spannungsabfälle (sog. "IR-Drop") in dem elektronischen Leiter der negativen und der positiven Elektrode zwischen den Ableitelementen und in der Nähe der Oberkante der Elektroden statt. Der genaue Ort hängt von den unterschiedlichen elektronischen Leitfähigkeiten der Leiter ab. Für den Fall einer homogenen Degradation einer gleichmäßig über die gesamte Fläche mit Graphit befüllten negativen Elektrode ist dann auch an der Oberkante bzw. in der Nähe der Oberkante mit der Lithiumabscheidung zu rechnen.

Die Lithiumabscheidung in $SO_2$-haltigen Elektrolyten ist, wie in der entsprechenden Literatur beschrieben, kinetisch gehemmt. Die Ausbildung von wachstumsfähigen Lithiummetallkeimen erfolgt erst dann, wenn das Elektrodenpotential der negativen Elektrode einen Wert von unter ca. -50 mV vs. Li/ Li+ erreicht hat. Erst dann bilden sich die Lithiummetallabscheidungen in verschiedenen Formen.

Wie aus Untersuchungen bekannt, ist Lithiummetall in kleinen Volumina, d.h. in Hohlräumen zwischen z. B. $20\mu m$ [Mikrometer] -Körnern eines inerten Materials, nicht mehr oder nur sehr langsam reaktiv. Hohlräume können einen Durchmesser kleiner $100\mu m$ [Mikrometer], bevorzugt kleiner $50\mu m$ [Mikrometer] und insbesondere bevorzugt kleiner $10\mu m$ [Mikrometer] aufweisen. Frisch abgeschiedenes Lithium, welches in größeren Volumina vorliegt, beispielsweise in Hohlräumen mit mehr als $100\mu m$ [Mikrometer] Durchmesser, ist jedoch sehr reaktiv und setzt bei Reaktion mit Schwefeldioxid große Wärmemengen frei. So reagiert das Lithium nach der Formel:

$$6Li + SO_2 \rightarrow Li_2S + 2Li_2O$$

mit ca. 1600 KJ pro Formelumsatz.

Eine 50 Ah-Zelle hat ein Kopfvolumen von ca. 50ml [Milliliter]. Würde nun 1 mm$^3$, entsprechend ca. 0,5 mg, frisch an der Oberkante der negativen Elektrode abgeschiedenes Lithium (ca. 2mAh [Milliampere-Stunden]) nach obiger Formel abreagieren, so würde der Druck auf Grund der Temperaturerhöhung im Kopfvolumen um über 1,5 bar ansteigen.

Elektrochemische Batteriezellen wie beispielsweise Lithium-Ionen-Zellen enthalten im Normalbetrieb keine Ansammlungen von metallischen Abscheidungen, also von metallischem Lithium. Problematisch sind jedoch organische Batteriezellen hinsichtlich der Sicherheit. Sicherheitsrisiken werden insbesondere durch den organischen Elektrolyten verursacht. Wenn eine organische Batteriezelle (Lithium-Ionen-Zelle mit organischem Elektrolyten) z. B. wegen eines Produkt- bzw. Produktionsfehlers oder Überladens aufgrund metallischer Lithiumabscheidung Feuer fängt oder sogar explodiert, bildet das organische Lösungsmittel des Elektrolyten in Kombination mit anderen aktiven Materialien ein brennbares Gemisch. Um solche Risiken zu vermeiden, müssen zusätzliche Maßnahmen getroffen werden, insbesondere hinsichtlich einer sehr exakten Regelung der Lade- und Entladevorgänge und hinsichtlich zusätzlicher Sicherheitsmaßnahmen in der Batteriekonstruktion. Diese Maßnahmen sind umso aufwendiger, je höher die Kapazität der Batteriezelle und damit das Gefährdungsrisiko sind. Sie führen damit zu erhöhten Kosten und erhöhen zusätzlich Volumen und Gewicht erheblich und vermindern die Energiedichte.

Während des Aufladevorgangs lagern sich die Ionen des aktiven Metalls in oder an die negative Elektrode an, d.h. die Ionen des aktiven Metalls interkalieren oder insertieren in die negative Elektrode. Dabei können in SO2-haltigem Elektrolyten Lithiummetallkeime entstehen und die Ionen des aktiven Metalls fadenförmige metallische Abscheidungen (sog. Whisker) bilden, wenn die Ionen des aktiven Metalls nicht interkalieren bzw. insertieren. Whisker haben einen mit zunehmender Stromstärke dicker werdenden Durchmesser, der beispielsweise bei Lithium-Ionen-Zellen typischerweise $1\mu m$ [Mikrometer] - $2\mu m$ [Mikrometer] beträgt. Um ein Wachsen einer metallischen Abscheidung von der negativen bis zur positiven Elektrode zu verhindern, kann eine Batteriezelle einen Separator umfassen, der zwischen der negativen und positiven Elektrode angeordnet ist. Ein solcher Separator ist dabei so ausgestaltet, dass er Ionen des aktiven Metalls passieren lässt, jedoch metallische Abscheidungen des aktiven Metalls den Separator nicht durchdringen können. Der Separator verhindert damit die Ausbreitung metallischer Abscheidungen von der negativen zur positiven Elektrode und somit einen internen elektrischen Kurzschluss zwischen den Elektroden.

Separatoren sind in verschiedenen Ausführungsformen bekannt. Für organische Batteriezellen (Lithium-Ionen-Zellen mit organischem Elektrolyten) sind flexible Folien, beispielsweise mikroporöse Membranen aus Kunststoff oder Vliese aus Glasfaser oder Polyethylen bekannt. Weiterhin sind hitzebeständige keramische Separatoren oder Separatorschichten bekannt, die beispielsweise auf einem Vlies aufgetragen werden.

Die WO 99/15262 offenbart flexible keramische Separatoren auf einem dünnen Glasgewebeträger. Diese sind sehr gut biegsam und werden aufgerollt geliefert. Jedoch halten sie, d.h. die Verbundwerkstoffe aus keramischem Separator und Träger (Glasgewebe), gegenwachsendes Lithium nicht dauerhaft zurück. Werden solche flexiblen Separatoren gebogen, beispielsweise beim Auf- oder Abrollen auf eine oder von einer Transportrolle, so entstehen Mikrorisse in der keramischen Separatorschicht. Der Grund für das Versagen der flexiblen keramischen Separatoren liegt in den Mikrorissen, deren Rissbreite so groß ist, dass die in SO2-haltigem Elektrolyten sich bildenden ca. $1\mu m$ [Mikrometer] dicken Lithiumwhisker hindurchwachsen können.

Ein auf einer Elektrode aufgebrachter keramischer Separator wird in der WO 00/79631 offenbart.

Es hat sich zwar gezeigt, dass solche keramischen Separatoren unter anderem hinsichtlich der thermischen Belastbarkeit vorteilhaft sind. Jedoch weisen keramische Werkstoffe den Nachteil auf, dass diese spröde und damit anfällig für Beschädigungen sind. Insbesondere können durch Verformungen des keramischen Separators Risse im Mikrometerbereich erzeugt werden, sodass Lithiumwhisker durch diese hindurchwachsen können. Während solche Risse bei organischen Batteriezellen (Lithium-Ionen-Zellen mit organischem Elektrolyten) zu keiner negativen Beeinträchtigung führen, können diese, wie von den Erfindern festgestellt wurde, in Batteriezellen mit SO2-haltigem Elektrolyten nachteilig sein. Denn die Abscheidungen des aktiven Metalls (z. B. Lithium) können in SO2-haltigem Elektrolyt die zuvor beschriebenen Whisker ausbilden. Whisker des aktiven Metalls wachsen in $SO_2$-haltigem Elektrolyten zylinderförmig und können aufgrund ihres geringen Durchmessers von $1\mu m$ [Mikrometer] - $2\mu m$ [Mikrometer] durch die Risse hindurchwachsen, welche bei mechanischer Verformung des keramischen Separators entstanden sind. An den entsprechenden Stellen, d.h. dort wo der keramische Separator einen Riss aufweist, ist somit die Funktionalität des keramischen Separators nicht mehr vorhanden, sodass Whisker durch die Risse des Separators hindurchwachsen und es zu Kurzschlüssen zwischen den Elektroden der Batteriezelle kommen kann.

## DARSTELLUNG DER ERFINDUNG

Diese Nachteile sollen - zumindest teilweise - durch die nachfolgend beschriebene Batteriezelle behoben werden, welche zumindest eines der nachfolgend beschriebenen Elektrode-Separator-Elemente umfasst. Eine Separatorschicht des Elektrode-Separator-Elements soll dabei chemisch stabil gegenüber dem verwendeten aktiven Metall, vorzugsweise Lithium, und dem verwendeten Elektrolyten, vorzugsweise $SO_2$-basiert, sein, und soll weiterhin ausreichend mechanisch stabil gegenüber gegenwachsenden metallischen Abscheidungen beispielsweise in Form von Whiskern sein.

Der vorliegenden Erfindung liegt somit die Aufgabe zugrunde, für Batteriezellen, wie beispielsweise Lithium-Ionen-Zellen, mit $SO_2$-haltigem Elektrolyten, wie sie insbesondere vorstehend beschrieben sind, eine Separatorschicht bereitzustellen, die:

- ausreichend mechanisch stabil ist und unversehrt beim Stapeln der Elektroden und/oder Zusammenfügen zu einem Stapel sowie während des normalen Betriebs bleibt;
- gegen Lithium und den Elektrolyten chemisch stabil ist;
- kein Wasser und/oder keine Hydroxylgruppen und/oder keine löslichen Schwermetalle enthält, und
- gegenwachsendes Lithium nicht durchlässt.

Ein erfindungsgemäßes Elektrode-Separator-Element für wiederaufladbare elektrochemische Batteriezellen umfasst:

- eine starre Elektrode, die eine aktive Masse umfasst, und
- eine keramische Separatorschicht, die auf der Oberfläche des Elektrode-Separator-Elements angeordnet ist.

Die Oberfläche des Elektrode-Separator-Elements weist eine Oberflächengüte auf, die eine Rissbildung in der Separatorschicht bei einer Montage des Elektrode-Separator-Elements oder einem Zusammenfügen zu einem Stapel verhindert. Dabei ist die Oberfläche des

Elektrode-Separator-Elements so gestaltet, dass diese eine hohe Planparallelität aufweist, wobei die Planparallelität betragsmäßig Höhenunterschiede von maximal 10% der Dicke der Elektrode aufweist, sodass das Elektrode-Separator-Element idealerweise mit der gesamten Oberflächen plan auf einer entsprechend ebenso planparallel gestalteten Fläche aufliegt. Mit anderen Worten weist die Oberfläche des Elektrode-Separator-Elements also eine geringe Welligkeit auf.

Die hohe Oberflächengüte, also insbesondere die hohe Planparallelität bzw. geringe Oberflächenwelligkeit, des Elektrode-Separator-Elements wird durch den Herstellungsprozess der Elektrode und den Beschichtungsprozess, bei dem die Separatorschicht auf die Elektrode aufgebracht wird, erreicht.

Wie bereits oben angegeben, kann das erfindungsgemäße Elektrode-Separator-Element, bzw. die erfindungsgemäße beschichtete Elektrode, für nicht-wässrige wiederaufladbare elektrochemische Batteriezellen verwendet werden, beispielsweise in an sich bekannten Lithium-Ionen-Zellen mit $SO_2$-haltigem Elektrolyt, wie sie unter anderem vorstehend und in der WO 2015/067795 A1 beschrieben sind. In besonders vorteilhafter Weise kann das Elektrode-Separator-Element mit einem Elektrolyten verwendet werden, welcher zumindest ein erstes Leitsalz mit der stöchiometrischen Formel K(ASX)p aufweist, wobei K für ein Kation aus der Gruppe der Alkalimetalle mit p=1, der Erdalkalimetalle mit p=2 oder der Zinkgruppe mit p=2 steht, A für ein Element der dritten Hauptgruppe, S für Schwefel und X für ein Halogen steht, wobei das erste Leitsalz in Schwefeldioxid gelöst ist. Ein solcher Elektrolyt ist in der deutschen Patentanmeldung DE 10 2016 106 947.7 beschrieben.

Der Ausdruck "keramischer Separator" bzw. "keramische Separatorschicht" im Sinne der vorliegenden Erfindung bezeichnet anorganische nichtmetallische (elektronisch nicht leitende) Werkstoffe, die bezüglich der Elektronenleitung in die Klasse der Isolatoren fallen und hinsichtlich der Materialien insbesondere auf Silikaten (basierend auf Siliziumdioxid), Aluminiumoxiden (basierend auf Korund), weiteren Oxiden, wie Zirkonoxid oder Titanoxid, sowie nichtoxidischen Werkstoffen, wie Carbiden (z. B. Siliziumcarbid), Nitriden (Siliziumnitrid) oder Molybdänsilizid, basieren. Eine umfassende Definition mit detaillierten chemischen Elementen/Verbindungen findet sich in der WO 99/15262.

Dabei handelt es sich insbesondere um keramische Massen, die anorganische Komponenten aufweisen, die im Wesentlichen zumindest eine Verbindung aus einem Metall, einem Halbmetall oder einem Mischmetall mit zumindest einem Element der dritten bis siebten Hauptgruppe, aufweist. Erhältlich sind diese nach einem allgemeinen Aspekt durch Aufbringen und Abziehen oder alternativ durch Aufsprühen einer Suspension bzw. eines Sol auf eine negative oder eine positive Elektrode und durch zumindest einmaliges Erwärmen, bei welchem die Suspension (Sol) auf und/oder in der Elektrode, also dem Träger verfestigt wird. Die Suspension (Sol) weist mindestens eine anorganische Komponente auf, die zumindest eine Verbindung zumindest eines Metalls, eines Halbmetalls oder eines Mischmetalls mit zumindest einem Element der dritten bis siebten Hauptgruppe aufweist.

Die Herstellung keramischer Schichten ist dem Fachmann an sich bekannt, so dass er die entsprechenden Materialien und Verfahrensschritte kennt. Beispielhaft sei hier nur auf die WO 99/15262 verwiesen. Andere Verfahren finden sich beispielsweise in der DE 10055610 A1, in der in den Beispielen a) bis c) die Herstellung einer Keramikfolie beschrieben wird, bei der keine höhere Temperatur angewendet werden muss. In der DE 10142622 A1 wird ein Separator auf Glasgewebe nach obigen Methoden beschrieben. In der DE 10208280 A1 werden Separatoren auf Polymermembranen hergestellt. Der Temperaturbereich, der in den Beispielen aufgeführt wird, ist niedriger. Da in der vorliegenden Erfindung die Graphitelektrode mit der feuchten Beschichtung in einem Inertgas erhitzt wird, sind niedrigere Temperaturen hierfür nicht so wichtig. Jedoch sollte sichergestellt werden, dass die Separatorschicht wenig Wasser (weniger als 100 ppm) enthält. In der DE 10238944 A1 werden ebenfalls Herstellungsbeispiele benannt. Die DE 10238943 B4 beschreibt eine Separatorschicht auf einer positiven Elektrode. In der DE 10255123 A1 wird die Herstellung von wasserarmen Separatoren mit Hilfe des Einbringens von lithiumhaltigen Verbindungen oder der chemischen Nachbehandlung des Separators mit lithiumhaltigen Lösungsmitteln beschrieben. In der DE 10255122 A1 wird auf einer grobporösen eine feinkörnige Schicht aufgebracht.

Vorliegend wird jedoch die Suspension nach dem Auftragen mit einer Rakel abgezogen oder direkt aufgesprüht, wodurch eine besonders hohe Oberflächengüte, also eine besonders hohe Planparallelität bzw. geringe Oberflächenwelligkeit erreicht wird. Dabei haben die Elektroden bereits durch ihren Herstellungsprozess, der einen Walzvorgang umfasst, eine ausreichend hohe Oberflächengüte im Sinne einer geringen Welligkeit. Durch die hohe Oberflächengüte werden die Elektroden mit dem aufgebrachten keramischen Separator, nachfolgend als Elektrode-Separator-Element bezeichnet, beim Übereinanderstapeln und/oder Zusammenfügen zu einem Stapel aus mehreren Elektroden mit dazwischenliegenden Separatorschichten nicht in solch einem Maße verformt, dass die keramischen Separatorschichten Risse ausbilden. Durch das ebenmäßige, also planparallele Aufliegen der einzelnen Elektrodenoberflächen und Separatoroberflächen aufeinander, wird keine so große Dehnung in den keramischen Separatorschichten durch die einwirkende Kraft beim Zusammenfügen der Elektroden zu einem Stapel hervorgerufen, dass das keramische Material versagt und Risse bzw. Mikrorisse sich ausbilden. Mit anderen Worten bleiben die beim Aufeinanderstapeln der Elektroden- bzw. Separatorschichten in der keramischen Separatorschicht entstehenden Biegekräfte so klein, dass die keramische Separatorschicht des Elektroden-Separator-Elements nicht reißt und damit keine Mikrorisse ausbildet.

Gegenstand der Erfindung ist ferner eine nicht-wässrige wiederaufladbare elektrochemische Batteriezelle, umfassend einen $SO_2$-haltigen Elektrolyten und mindestens ein zuvor beschriebenes Elektrode-Separator-Element oder ein zuvor beschriebener Stapel.

Vorzugsweise kann die Batteriezelle weiter ein Gehäuse mit einer oberen Abdeckung bzw. einem Deckel umfassen, sowie weiterhin ein Ableitelement für die negative Elektrode, ein Ableitelement für die positive Elektrode, mindestens eine Durchführung, z. B. eine Glasdurchführung, für das Ableitelement für die negative Elektrode, mindestens eine Durchführung, z. B. eine Glasdurchführung für das Ableitelement für die positive Elektrode, wobei sich zwischen Oberkante der oberen Fläche der Elektroden und der unteren Fläche der Abdeckung ein Zwischenraum (Kopfvolumen) befindet.

KURZE FIGURENBESCHREIBUNG

Die Erfindung wird nachfolgend unter Bezugnahme auf die Figuren und Beispiele veranschaulicht, ohne sie darauf zu beschränken. Es wird darauf hingewiesen, dass die Merkmale der einzelnen Ausführungsformen beliebig miteinander kombiniert werden können.

Es zeigen:

| | |
|---|---|
| Figur 1 | eine Schnittansicht eines schematischen Aufbaus einer wiederaufladbaren Batteriezelle, |
| Figur 2 | eine Schnittansicht eines schematischen Elektrode-Separator-Elements umfassend eine Elektrode geringer Oberflächengüte und eine Separatorschicht geringer Oberflächengüte; |
| Figur 3 | eine Schnittansicht eines schematischen Elektrode-Separator-Elements umfassend eine negative Elektrode hoher Oberflächengüte und Separatorschichten hoher Oberflächengüte; |
| Figur 4 | eine Schnittansicht eines schematischen Elektrode-Separator-Elements umfassend eine positive Elektrode hoher Oberflächengüte und Separatorschichten hoher Oberflächengüte; |
| Figur 5A-C | Schnittansichten aneinandergrenzender schematischer Elektroden und Elektrode-Separator-Elemente; |
| Figur 6 | eine schematische Schnittansicht eines Stapels einer wiederaufladbaren Batteriezelle umfassend Elektrode-Separator-Elemente; und |
| Figur 7 | eine schematische Schnittansicht einer wiederaufladbaren Batteriezelle umfassend Elektrode-Separator-Element. |

AUSFÜHRLICHE BESCHREIBUNG

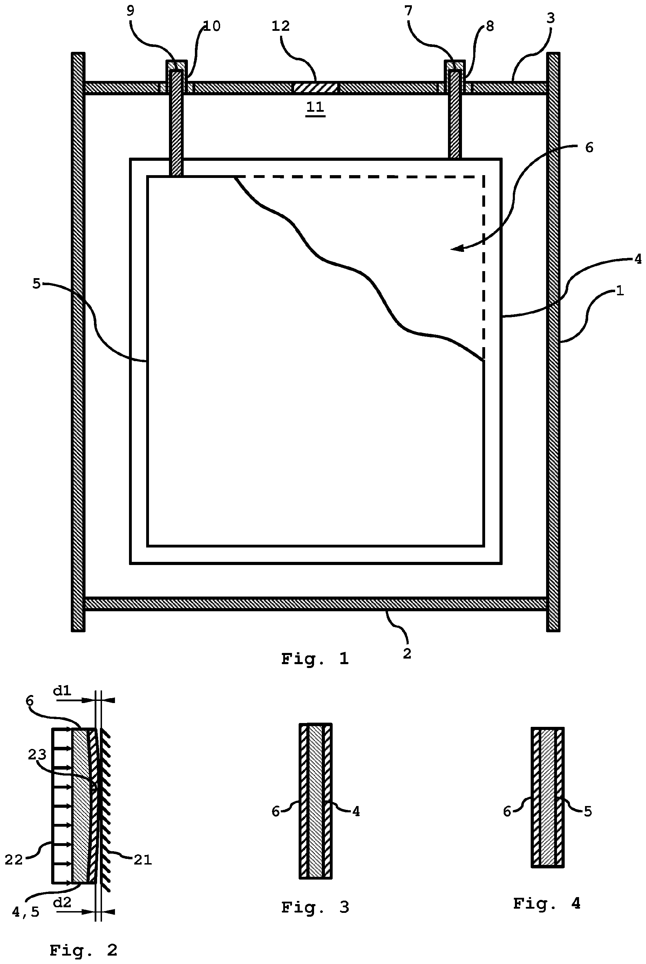

Figur 1 zeigt eine schematische Ansicht einer nicht-wässrigen wiederaufladbaren elektrochemischen Batteriezelle mit einem Gehäuse, welches ein umlaufendes Seitengehäuse 1, einen Boden 2 und einen Deckel 3 aufweisen kann, sowie mindestens eine negative Elektrode 4, mindestens eine positive Elektrode 5 und jeweils mindestens eine zwischen den Elektroden 4, 5 angeordnete keramische Separatorschicht 6. Weiterhin umfasst die Batteriezelle mindestens ein negatives Ableitelement 7 für die mindestens eine negative Elektrode 4, mindestens ein positives Ableitelement 9 für die mindestens eine positive Elektrode 5, mindestens einen negativen Pol mit Glasdurchführung 8 für das mindestens eine negative Ableitelement 7, mindestens einen positiven Pol mit Glasdurchführung 10 für das mindestens eine positive Ableitelement 9, und einen Elektrolyten, wobei sich zwischen einer oberen kurzen Kantenfläche der Elektroden 4, 5 und einer unteren Fläche des Deckels 3 ein Zwischenraum 11 (Kopfvolumen) befindet. Die negative Elektrode 4 und die positive Elektrode 5 können mit dazwischen angeordneter Separatorschicht 6 montiert werden, in dem die Elektroden 4, 5 mit dazwischen angeordneter Separatorschicht 6 gestapelt und danach mit einem gewissen Druck zusammengefügt werden, um in das Gehäuse eingepasst zu werden. Im Falle von tiefgezogenen Gehäusen ist der Boden 2 Teil des Seitengehäuses 1. Im Falle von verschweißten oder gepressten Gehäusen sind der Boden 2 und der Deckel 3 jeweils eigene Bauteile. An die im Deckel 3 ggf. eingelassenen negativen Pole mit Glasdurchführung 8 sind über die negativen Ableitelemente 7 die negativen Elektroden 4 angeschlossen, und an die im Deckel 3 ggf. eingelassenen positiven Pole mit Glasdurchführung 10 sind über die positiven Ableitelemente 9 die positiven Elektroden 5 angeschlossen.

Die erfindungsgemäße Batteriezelle kann für mobile und/oder stationäre Anwendungen ausgestaltet sein.

Der Elektrolyt kann dabei ein Lithiumsalz (z. B. $LiPF_6$) aufweisen, welches in einem organischen Lösungsmittel oder Lösungsmittelgemisch, beispielsweise auf der Basis von Ethylencarbonat, gelöst ist. Batteriezellen mit derartigen Elektrolyten sind als organische Batteriezellen, insbesondere als organische Lithium-Ionen-Zellen bekannt. Alternativ dazu kann ein anorganischer Elektrolyt verwendet werden. In einer Ausführungsform kann der Elektrolyt Schwefeldioxid ($SO_2$) enthalten. Als $SO_2$-haltiger Elektrolyt wird ein Elektrolyt bezeichnet, der $SO_2$ oder Reaktionsprodukte des $SO_2$ nicht nur als Zusatz in geringer Konzentration enthält, sondern bei dem die Beweglichkeit der Ionen, welche den Ladungstransport bewirken, zumindest teilweise durch das $SO_2$ oder durch die Reaktionsprodukte des $SO_2$ gewährleistet ist. Im Fall der aktiven Kationen aus der Gruppe der Alkalimetalle wird vorzugsweise ein Tetrahalogenoaluminat als Anion für das Leitsalz im Elektrolyten verwendet. Für das Lithium-Kation als aktives Kation wird vorzugsweise Lithiumtetrachloroaluminat als Leitsalz eingesetzt.

Batteriezellen mit $SO_2$-haltigem Elektrolyten besitzen in der Regel ein festes Gehäuse beispielsweise aus Edelstahl.

Wegen des $SO_2$-Dampfdruckes und zur Vermeidung von eindringenden Gasen, wie z. B. Wasserdampf, ist das Gehäuse günstigerweise hermetisch geschlossen, in einem Ausführungsbeispiel verschweißt. Die Glasdurchführungen sorgen für eine hohe, jahrzehntelange Dichtigkeit. Im Allgemeinen sind dabei im Deckel 3 zwei Glasdurchführungen, eine für die negativen Pole 8 und eine für die positiven Pole 10 eingeschweißt. Das Gehäuse selbst ist in diesem Aufbau potentialfrei. Grundsätzlich sind auch andere Aufbauten möglich, wie beispielsweise eine Glasdurchführung der einen Elektrodenart, z. B. positiv, im Deckel 3 und der anderen Elektrodenart, z. B. negativ, am Boden 2 oder unter Nutzung des Seitengehäuses 1 als Ableiter mit nur einer Glasdurchführung für eine Elektrodenart im Deckel 3 und der Kontaktierung der anderen Elektrodenart am Boden 2.

Ferner kann eine Berstscheibe 12 vorgesehen sein, um bei übermäßigem Anstieg des Gasdrucks innerhalb der Batteriezelle den Überdruck in kontrollierter Weise abzulassen und dadurch eine unkontrollierte Explosion zu vermeiden. Die Berstscheibe kann dabei bei einem definierten maximalen Druck bersten. Der maximale Druck ist in einer bevorzugten Ausführungsform zu 20 bar definiert.

Eine Elektrode 4, 5 hat im Allgemeinen die Form eines Quaders, der eine Höhe H, eine Breite B und eine Dicke D aufweist, wobei $H \geq B \gg D$ ist. Die Fläche H x B der Elektrode 4, 5 ist die vordere bzw. hintere Hauptfläche. Die Fläche B x D entspricht der oberen bzw. der unteren Fläche, wobei mit oberer Fläche nachfolgend die Fläche bei den Ableitelementen 7, 9 bezeichnet wird. Die Flächen H x D sind die erste (z. B. linke) und die zweite (z. B. rechte) Seitenfläche.

Die negative Elektrode 4 und/oder die positive Elektrode 5 können einen Träger bzw. eine Matrix umfassen, die in einer Ausführungsform aus metallischem Werkstoff gebildet ist, und eine eingearbeitete aktive Masse aufweist. Der Träger kann ein Metallschaum sein, in den die aktive Masse mechanisch eingearbeitet ist.

Als Metallschäume kommen alle Metalle oder deren Legierungen in Frage. Bevorzugt sind Schäume, die in der $SO_2$-haltigen Elektrolytlösung stabil sind, wie z. B. Fe, Co, Ni, Mn, Cr, W, V, Ti, Mo, Zr. Andere Metalle, wie z. B. Al, Cu, Zn, Ag, die ebenfalls als Schäume gefertigt werden können, werden mit einer Schutzbeschichtung überzogen, z. B. mit W, so dass diese korrosionsstabil gegen den $SO_2$-haltigen Elektrolyten (vgl. DE10128970 A1) sind.

Dabei kann die negative Elektrode 4 sowie die positive Elektrode 5 einen Metallschaum, beispielsweise Nickelschaum, mit hoher Porosität (z. B. 90% [Prozent] - 95% [Prozent]) als Matrix bzw. Träger und ein in den Metallschaum eingebrachtes Interkalationsmaterial (z. B. Graphit, $C_6$) umfassen. Dazu wird der Metallschaum mit einer Interkalationsmaterialpaste, umfassend das Interkalationsmaterial als aktive Masse, gegebenenfalls Binder und/oder leitfähigen Zusatz, wie Ruß, und ein organisches Lösungsmittel, von einer Maschine bestrichen bzw. befüllt. Nachdem das organische Lösungsmittel in einer Wärmestrecke verdampft ist, wird der Metallschaum mit der aufgenommenen lösungsmittelfreien Interkalationsmaterialpaste zusammen zu einer negativen bzw. positiven Elektrode 4, 5 gewalzt. Das Verdampfen kann dabei wegen der Explosionsgefahr des Gemisches aus Sauerstoff und Lösungsmittel unter Schutzgas stattfinden.

Die Herstellung der negativen Elektroden 4, wie auch der positiven Elektroden 5 nach dem Stand der Technik ist mit fertigungstechnischen Ungenauigkeiten behaftet. So kann beispielsweise beim Walzen der negativen Elektroden 4, bedingt durch eine ungleichmäßige Verteilung der Interkalationsmaterial-Paste, umfassend das Interkalationsmaterial als aktive Masse, gegebenenfalls Binder und/oder leitfähigen Zusatz, wie Ruß, und das organische Lösungsmittel, in dem Träger, eine nicht ausreichend planparallele Oberfläche der negativen oder positiven Elektrode 4, 5 entstehen. Auch können zu große Oberflächenwelligkeiten der Elektroden 4, 5 vorliegen. Die keramische Separatorschicht 6 kann ebenfalls eine ungenügende Planparallelität oder zu große Welligkeit der Oberfläche aufweisen.

Die Elektroden 4, 5 können gemäß der vorliegenden Erfindung eine Dicke von 0,2mm [Millimeter] bis 1mm [Millimeter] und eine Kantenlänge von mindestens 5cm [Zentimeter] und dementsprechend eine Fläche von mindestens 25cm$^2$ [Quadratzentimeter] aufweisen. Dazu werden die mit der lösungsmittelfreien Interkalationsmaterialpaste befüllten Träger durch einen Walzvorgang von einer Ausgangsdicke des Trägers, welche 1,5mm [Millimeter] oder mehr betragen kann, auf die gewünschte Zieldicke heruntergewalzt. Dabei verringert sich die Porosität des Trägers mit der lösungsmittelfreien Interkalationsmaterialpaste von dessen anfänglichem Wert auf eine geringere Porosität für die Elektrode 4 bzw. 5. Die gewünschte Porosität (Zielporosität) sollte auf ca. 1% [Prozent] Genauigkeit bezüglich der Abweichung eingehalten werden und liegt üblicherweise im Bereich von 20% [Prozent] bis 30% [Prozent]. Die tatsächlich bei der Herstellung erreichte Porosität und Dicke der Elektrode 4, 5 hängen maßgeblich von der Menge an lösungsmittelfreier Interkalationsmaterialpaste ab, mit der der Träger befüllt wurde. Ist beispielsweise bei einer fehlerhaften Herstellung der Interkalationsmaterialpaste der Lösungsmittelanteil in der Interkalationsmaterialpaste zu hoch, so ist nach dem Verdampfen des Lösungsmittels die Masse an lösungsmittelfreier Interkalationsmaterialpaste entsprechend zu niedrig. Dementsprechend wird die Porosität der fertigen Elektrode 4, 5 größer als der Zielwert sein. Im umgekehrten Fall, also wenn zu viel lösungsmittelfreie Interkalationsmaterialpaste in den Träger eingefüllt wird, kann die Walze, die beim Walzvorgang nur einen bestimmten maximalen Druck erzeugen kann, die Elektrode 4, 5 gegebenenfalls nicht auf das gewünschte Maß verdichten, sodass die Elektrode eine geringere Porosität als die Zielporosität und zudem noch eine größere Dicke als die Zieldicke besitzt.

Eine unter normalen Produktionsumständen fehlerfrei hergestellte Elektrode 4, 5 hat eine hohe Oberflächengüte. Diese hängt sowohl vom Rundlauf der Walze als auch von der Welligkeit und Rauigkeit, also der Oberflächengüte der Walze sowie, wie oben aufgezeigt, von der Gleichmäßigkeit der Befüllung mit der lösungsmittelfreien Interkalationsmaterialpaste ab. Die Oberflächengüte der Elektrode 4, 5 ist nach dem Walzvorgang so hoch, dass eine beim Stapeln und/oder Zusammenfügen (Montieren) auf die Elektrode 4, 5 aufgebrachte Separatorschicht 6 eines gegenüberliegenden Elektrode-Separator-Elements planparallel aufliegt und daher nicht so stark verformt wird, dass Mikrorisse in der Separatorschicht 6 entstehen.

Der Träger bzw. die Matrix gibt der Elektrode 4, 5 zusammen mit der lösungsmittelfreien Interkalationsmaterialpaste durch das Walzen eine gewisse mechanische Stabilität und sorgt für eine steife bzw. starre Konfiguration der Elektrode 4, 5. Aufgrund des befüllten Trägers (Matrix) und dem Walzen ist die Elektrode 4, 5 somit steif bzw. starr im Vergleich zu den oben erwähnten flexiblen Separatorfolien.

Alternativ kann die negative Elektrode 4 und/oder die positive Elektrode 5 einen Träger bzw. eine Matrix z. B. aus Graphitfolie und eine eingearbeitete aktive Masse umfassen. Aus dieser Matrix kann durch Zusatz von Binder und/oder mechanisch/thermischer Behandlung eine starre Graphit-Fluorpolymer-Composit-Platte (z. B. Bipolarplatte des Herstellers SGL Carbon) gebildet werden.

In einer Ausführungsform können Kohlenstofffaservliese als elektronische Leiter und als dreidimensionale Träger der positiven Masse in einer Elektrode verwendet werden. Die Vliese können dabei beidseitig auf einen Kontakt aus Streckmetall aufgebracht sein und zur Verfestigung ein Gemisch aus aktiver Masse und einem Klebstoff enthalten. Derartige Elektroden bzw. Kompositelektroden sind flexibler und elastischer als die oben beschriebenen Metallschaumelektroden, passen sich geringfügigen Unebenheiten einer gegenüberliegenden Elektrode bzw. einem gegenüberliegenden Elektrode-Separator-Element gut an, sodass diese Elektroden in einer Batteriezelle gegenüberliegend zu einem Elektrode-Separator-Element angeordnet sein können, selbst jedoch keine keramische Separatorschicht aufweisen. Eine solche Elektrode mit Kohlenstofffaservlies kann dazu insbesondere auch einem Walzvorgang unterzogen werden, welcher eine Oberfläche hoher Güte bewirkt, sodass die Elektrode planparallel an der Oberfläche eines benachbart angeordneten Elektrode-Separator-Elements anliegt. In einer Ausführungsform kann die Batteriezelle in einer Ausführungsform eine Kompositelektrode z. B. zwei Kohlenstofffaservliese mit einem dazwischen angeordneten Ableiter, z. B. Nickelstreckmetall, aufweisen.

Vorzugsweise wird als aktive Masse ein Interkalationsmaterial, wie Graphit ($C_6$) oder Lithiumeisenphosphat (LiFePO4), eingesetzt. Mit diesen Materialien für die negative Elektrode 4 bzw. die positive Elektrode 5 wird die erfindungsgemäße Aufgabe in besonders günstiger Weise gelöst.

Die positive Elektrode 5 kann alternativ mit Lithiumeisenphosphat (LEP) als aktive Masse, einem üblichen organischen Binder und einem leitfähigen Zusatz - zusammen die positive Masse - hergestellt werden. Wird die negative Elektrode 4 als Elektrode-Separator-Element verwendet, dann wird vorzugsweise bei der positiven Elektrode 5 nicht ein Metallschaum, wie Nickelschaum, als Träger verwendet, da beim Stapeln der Elektroden bei schlechter Oberflächengüte gegebenenfalls auftretende Nickelschaumspitzen der positiven Elektrode 5 die Separatorschicht 6 auf der negativen Elektrode 4 beschädigen könnten.

In einer erfindungsgemäßen Batteriezelle kann die Hauptfläche (H x B) der negativen Elektrode 4 der Hauptfläche der positiven Elektrode 5 gegenüber liegen.

Dabei kann die negative Elektrode 4 größer als die positive Elektrode 5 sein. Die negative Elektrode 4 kann in der Hauptfläche die positive Elektrode 5 an allen Kanten (vgl. Fig. 2-7) überlappen. Vorzugsweise ist die Überlappung größer als 0,1mm [Millimeter], besonders bevorzugt größer 0,5mm [Millimeter]. Dadurch kann sichergestellt werden, dass der positiven Elektrode 5 über ihre gesamte Hauptfläche eine negative Elektrode 4 gegenüber liegt. Weiterhin kann die Kapazität zur Interkalation von aktiven Ionen der von der positiven Elektrode 5 bedeckten Fläche der negativen Elektrode 4 größer als die der positiven Elektrode 5 sein. Dies kann beispielsweise dadurch erreicht werden, dass mehr Masse des aktiven Materials (z. B. Graphit, $C_6$) in der negativen Elektrode 4 bzw. in der beschatteten Fläche der negativen Elektrode 4 vorliegt, z. B. mindestens 5% [Prozent] mehr, besonders bevorzugt 10% [Prozent] bis 20% [Prozent] mehr, als in der positiven Elektrode 5. So kann die Wahrscheinlichkeit für das Auftreten von metallischen Abscheidungen des aktiven Metalls, durch Ionen, die nicht interkalieren können, an der negativen Elektrode 4 beim Aufladen der Batteriezelle verringert werden.

Die erfindungsgemäße Batteriezelle kann dabei so aufgebaut sein, dass die positive Elektrode 5 $LiFePO_4$ aufweist, der Elektrolyt ein $SO_2$-haltiger Elektrolyt ist, und die negative Elektrode 4 als aktives Material Graphit ($C_6$) enthält, das insbesondere in einem Metallschaum vorliegt.

Die Herstellung der positiven Elektrode 5 und die Montage der Batteriezellen werden bevorzugt in einem Trockenraum ausgeführt. Die Herstellung der negativen Elektrode 4 kann außerhalb eines Trockenraums erfolgen, sie wird aber nach dem Verdampfen des Lösungsmittels noch heiß in den Trockenraum eingebracht, sodass dabei möglichst wenig Feuchtigkeit in den Trockenraum eingebracht wird.

Durch Wasser, welches bei der Produktion der Batteriezelle in dieser verblieben oder durch Schäden an der Batteriezelle, beispielsweise Risse in den Glasdurchführungen von Ableitelementen, in Form von Wasserdampf in diese gelangt ist, kann die Kapazität des Interkalationsmaterials der negativen Elektrode 4 sinken. Wasser löst aus der positiven Elektrode 5 Eisen-Ionen heraus. Diese Eisen-Ionen lagern sich in das aktive Material (z. B. Graphit, $C_6$) der negativen Elektrode 4 ein und blockieren Interkalationsplätze für die aktiven Ionen (z. B. Lithium-Ionen, $Li^+$). Dadurch sinkt die Kapazität der negativen Elektrode 4 ab und es kann zur Bildung von metallischen Abscheidungen des aktiven Metalls, beispielsweise in Form von Whiskern mit einem Durchmesser von typischerweise $1\mu m$ [Mikrometer] - $2\mu m$ [Mikrometer] bei Lithium-Ionen-Zellen mit $SO_2$-haltigem Elektrolyten, kommen. Besonders beim Aufladevorgang kann nicht die gesamte aktive Masse in die negative Elektrode 4 interkalieren, so dass sich metallische Abscheidungen des aktiven Metalls bilden.

Erfindungsgemäß ist eine Separatorschicht 6 eine keramische Separatorschicht 6 in Form von einer oder mehreren Schichten, die auf den Elektroden 4, 5 angeordnet sein können.

Ein erfindungsgemäßes Elektrode-Separator-Element kann eine beschichtete Elektrode 4, 5 sein, auf die als Schicht eine keramische Separatorschicht 6 insbesondere auf der Hauptfläche (H x B) aufgebracht ist. Die starre Elektrode 4, 5 verleiht dem Separator 6 durch ihre Stützwirkung zusätzliche mechanische Stabilität gegen Verformungen.

Erfindungsgemäße keramische Separatorschichten 6 haben eine Dicke im Mikrometerbereich, bevorzugt kleiner $200\mu m$ [Mikrometer], und besonders bevorzugt im Bereich von $10\mu m$ [Mikrometer] bis $20\mu m$ [Mikrometer]. Der elektrische Widerstand einer wiederaufladbaren Batteriezelle wird auch maßgeblich durch die Separatorschicht 6 bewirkt. Daher wird die Separatorschicht 6 so dünn wie möglich gewählt, um den Verlust von elektrischer Leistung (Wärme) möglichst gering zu halten. Dabei muss die keramische Separatorschicht 6 jedoch mindestens so dick sein, dass sie gegen wachsendem aktivem Metall, beispielsweise in Form von Lithiumwhiskern, mechanisch standhalten kann. Zudem weisen die keramischen Separatoren 6 einen Porendurchmesser auf, die es den aktiven Ionen (z. B. Lithium-Ionen, Li+) gestattet durch die Separatorschicht zu wandern, jedoch metallische Abscheidungen an Elektroden 4, 5, beispielsweise in Form von zylindrischen Whiskern mit einem Durchmesser von $1\mu m$ [Mikrometer] - $2\mu m$ [Mikrometer] bei Lithium-Ionen-Zellen mit $SO_2$-haltigem Elektrolyten, sicher zurückhält.

In einer Ausführungsform des Elektrode-Separator-Elements kann mindestens die obere und/oder die untere Fläche (B x D) und/oder die erste und/oder die zweite Seitenfläche (H x D) der Elektrode 4, 5 zusätzlich zu deren Hauptfläche mit der keramischen Separatorschicht 6 beschichtet sein, wobei die Dicke dieser Schicht größer als die oben genannten bevorzugten Dicken sein kann. Besonders bevorzugt werden alle Oberflächen der negativen und/oder positiven Elektrode 4, 5 mit einer keramischen Separatorschicht 6 versehen.

In wiederaufladbaren Batteriezellen nach der vorliegenden Erfindung können statt nur einer negativen Elektrode 4 und einer positiven Elektrode 5 mit dazwischen angeordneter keramischer Separatorschicht 6 sogenannte Stapel bzw. "Stacks" aus mehreren wechselweise angeordneten positiven Elektroden 5 und negativen Elektroden 4 mit jeweils dazwischen angeordneter keramischer Separatorschicht 6 zum Einsatz kommen. Solche Stapel können hergestellt werden, indem wechselweise negative Elektroden 4 und positive Elektroden 5 übereinander gestapelt werden, wobei zwischen je zwei Elektroden eine keramische Separatorschicht 6 angeordnet ist. Die gestapelten Elektroden 4, 5 mit dazwischen angeordneten keramischen Separatoren 6 können zu einem Stapel zusammengefügt werden. Durch das Zusammenfügen mit einem gewissen Druck kann der Stapel auf das richtige Maß zum Einbau in das Gehäuse der Batteriezelle gebracht werden. Zudem kann ein ausreichender Kontakt zwischen den Oberflächen der Elektroden 4, 5 und den Oberflächen der keramischen Separatoren 6 sichergestellt werden. Dies ist notwendig, damit in der fertigen Batteriezelle kein Hohlraum entsteht, in dem eine Ansammlung von aktivem Metall ein kritisches Volumen, welches für Lithium ca. 1mm$^3$ [Kubikmillimeter] beträgt, überschreitet.

Da Keramiken an sich eine hohe Festigkeit mit einem Elastizitätsmodul im Bereich von 100GPa [Gigapascal] bis 1000GPa [Gigapascal] aufweisen, jedoch mit einer Bruchzähigkeit im Bereich von 1MPam$^{1/2}$ [Megapascal mal Meter hoch Einhalb] bis 20 MPam$^{1/2}$ [Megapascal mal Meter hoch Einhalb] sehr spröde sind, kommt es bei Verformungen, die größer als eine gewisse maximale Durchbiegung bzw. Dehnung sind, zur Rissbildung bzw. Mikrorissbildung und bei weiterer Verformung zum Bruch. Im Gegensatz zu elastischen Werkstoffen, ist die Grenze zwischen elastischer Verformung und plastischer Verformung, die mit Rissbildung bzw. Mikrorissbildung einhergeht, nicht ausgedehnt und kaum durch eine Werkstoffprüfung bestimmbar. Daher wird meistens nur die Festigkeitsgrenze, jedoch nicht die Grenze des elastischen Bereichs bei der Werkstoffprüfung von Keramiken bestimmt.

Die Festigkeit von Keramiken weist zudem eine starke werkstoffimmanente Streuung auf und muss daher statistisch beschrieben werden. Unter anderem ist die Festigkeit von der Probengröße, wie auch von der Belastungsgeschwindigkeit abhängig. Dabei beschreibt die Streuung der Festigkeitswerte von mehreren Proben bei der Werkstoffprüfung von Keramiken die Verteilung der bruchauslösenden Defekte im Gefüge. Beispielsweise ist es wahrscheinlicher einen großen Defekt, der zu einem Versagen bei einer bestimmten Belastung führt, in einer großen Probe zu finden als in einer kleinen Probe. Folglich ist die mittlere Festigkeit von großen Proben geringer als die von kleinen Proben. Diese Abhängigkeit beim spröden Bruchverhalten von Keramiken wird mittels der Weibull-Statistik (Bruchstatistik) berücksichtigt.

Typische Werkstoffprüfungsverfahren sind der 3-Punkt-Biegeversuch, der 4-Punkt-Biegeversuch oder der 4-Kugeln-Biegeversuch. Bei diesen wird die Belastungsgrenze der Keramik als maximale Spannung beim Bruch sowie der Biegemodul, welcher das Pendant zum Elastizitätsmodul bei Zugversuchen ist, bestimmt. Aus der maximalen Spannung und dem Biegemodul lässt sich die maximale Durchbiegung berechnen, bei welcher die Keramik bricht.

Beispielswiese berechnet sich die maximale Durchbiegung aus dem Biegemodul und der maximalen Spannung bzw. maximalen Prüfkraft aus dem 4-Punkte-Biegeversuch wie folgt:

$$D_{L,max} = \frac{3l_A l_B^2 F_{max}}{4Eba^3} = \frac{l_B^2 \sigma_{max}}{4Ea}$$

wobei E der Biegemodul in kN/mm$^2$ [Kilonewton pro Quadratmillimeter], $l_A$ die Spannlänge (Abstand zwischen Auflagepunkt und näher gelegenem Druckpunkt des Prüfstempels) in mm [Millimeter], $l_B$ die Länge des Bezugsbalkens (zwischen den Druckpunkten, symmetrisch zu den Druckpunkten aufgelegter Balken) in mm [Millimeter], $F_{max}$ die ma-ximale Belastung in kN [Kilonewton], b die Probenbreite in mm [Millimeter], a die Probendicke in mm und $D_{L,max}$ die maximale Durchbiegung bis zum Bruch in mm [Millimeter] ist.

Da die plastische Verformung unter Last bereits vor dem endgültigen Versagen durch Mikrorissbildung eintritt, ist die Durchbiegung, welche keramische Schichten ertragen, ohne unter Belastung Mikrorisse auszubilden, geringer als die maximale Durchbiegung. Somit sollte ein gewisser Sicherheitsabstand zu der maximalen Durchbiegung eingehalten werden, wenn Mikrorissbildung vermieden werden soll.

Falls die Oberflächen der Elektroden 4, 5 und/oder der keramischen Separatorschicht 6 nicht nahezu absolut plan sind, kann es bei mechanischer Belastung zu Rissen bzw. Mikrorissen in den keramischen Separatorschichten 6 kommen. So kann es bei der Montage von elektrochemischen Batteriezellen, also beim Stapeln und/oder zusammenfügen von Elektroden 4, 5 mit keramischer Separatorschicht 6, vorkommen, dass eine Elektrode 4, 5 die eine zu geringe Oberflächengüte (Planparallelität bzw. Oberflächenwelligkeit) aufweist und/oder eine keramische Separatorschicht 6, die eine zu geringe Oberflächengüte aufweist, einen Bruch der keramischen Separatorschicht 6 beim Stapeln und/oder Zusammenfügen mit einem gewissen Druck verursachen. Dies ist schematisch in Figur 2 dargestellt. Die nicht planparallele keramische Separatorschicht 6 auf der positiven oder negativen Elektrode 4, 5 eines Elektrode-Separator-Elements wird durch eine Kraft 22, die auf die Hauptfläche des Elektrode-Separator-Elements, beispielsweise bei der Montage der Batteriezelle (Stapeln/Zusammenfügen) aufgebracht wird, belastet. Mit dem Bezugszeichen 21 ist hier schematisch eine planparallele Fläche dargestellt, die stellvertretend für eine Hauptfläche einer weiteren Elektrode 4, 5 oder einer weiteren keramischen Separatorschicht 6 steht. Durch die aufgebrachte Kraft 22 wird das Elektrode-Separator-Element so stark belastet, dass eine Verformung stattfindet, bis die Spalte $d_1$ und $d_2$ geschlossen sind. Dies führt zu einer solch hohen Dehnung in der keramischen Separatorschicht 6, dass aufgrund der durch die Dehnung in der keramischen Separatorschicht 6 hervorgerufenen Spannung Risse bzw. Mikrorisse 23 entstehen. Diese (Mikro-)Risse 23 bilden einen Durchgang für Abscheidungen von aktivem Metall (z. B. Lithium, Li), so dass es zu Kurzschlüssen zwischen negativer Elektrode 4 und positiver Elektrode 5 kommen kann. Die metallischen Abscheidungen beispielsweise in Form von zylindrischen Whiskern mit einem Durchmesser von $1\,\mu$m [Mikrometer] - $2\,\mu$m [Mikrometer] in Lithium-Ionen-Zellen mit $SO_2$-haltigem Elektrolyten wachsen dabei beim Aufladevorgang durch die Risse 23 in dem Separator 6 von der negativen Elektrode 4 zur positiven Elektrode 5.

Wie bereits zuvor ausgeführt sind die Elektroden 4, 5 erfindungsgemäß planparallel. Dabei hat die Planparallelität einer Elektrode (z. B mit einer Dicke von 500 $\mu$m [Mikrometern]) über die Fläche der Elektrode betragsmäßig maximale Höhenunterschiede von weniger als 10 % [Prozent] der Dicke (z. B. weniger als 50 $\mu$m), vorzugsweise weniger als 4 % der Dicke (z. B. weniger als 20 $\mu$m), weiter bevorzugt weniger als 2 % (z. B. weniger als 10 $\mu$m), ferner bevorzugt weniger als 1 % (z. B. weniger als 5 $\mu$m) und besonders bevorzugt weniger als 0,2 % (z. B. weniger als 1 $\mu$m) Dies lässt sich durch eine geeignete Walze mit möglichst gleichmäßigem Rundlauf und hoher Oberflächengüte sowie gleichmäßige Befüllung der Elektroden 4, 5 erreichen.

Um eine Rissbildung bzw. Mikrorissbildung bei der Montage, also beim Stapeln und/oder Zusammenfügen der Elektroden zu einem Stapel, zu vermeiden, kann erfindungsgemäß die Separatorschicht 6 vor dem Erwärmen (Temper-/Sinterprozess) auf eine der Elektroden 4, 5 planparallel durch das Aufbringen und Abziehen mittels einer Rakel oder durch Aufsprühen aufgebracht werden. Durch diesen Arbeitsschritt weist die Planparallelität und die Oberflächenwelligkeit, also die Oberflächengüte, der Oberfläche der keramischen Separatorschicht 6 nach dem Sinterprozess eine derart hohe Güte auf, dass die bei der Montage (Stapeln/Zusammenfügen) der Elektrode-Separator-Elemente zu einem Stapel auftretenden Verformungen in Form von Durchbiegungen der keramischen Separatorschicht 6 nicht so groß sind, dass sich (Mikro-)Risse 23 im Separator 6 bilden.

Die Separatorschicht 6 darf zudem aus elektrochemischen Gründen nicht zu stark in ihrer Dicke variieren, denn sonst würde die anliegende negative Elektrode 4 je nach Dicke der Separatorschicht 6 unterschiedlich stark belastet, also mit aktiven Ionen, hier Lithium-Ionen, beladen. Dabei darf die Dicke der Separatorschicht bevorzugt nicht zwischen mehr als $20\mu$m [Mikrometer] und $80\mu$m [Mikrometer] und besonders bevorzugt nicht zwischen mehr als $10\mu$m [Mikrometer] und $20\mu$m [Mikrometer] variieren.

Ein erfindungsgemäßes Elektrode-Separator-Element ist eine beschichtete Elektrode 4, 5, die erhältlich ist, in dem die Komponenten für die keramische Separatorschicht 6 als Suspension auf die negative Elektrode aufgebracht und mit einer Rakel möglichst gleichmäßig und glatt abgezogen wird, oder die Komponenten werden in einer alternativen Ausführungsform aufgesprüht. Anschließend wird die Elektrode 4, 5 mit aufgebrachter und abgezogener bzw. mit aufgesprühter Suspension bei einer Temperatur von 50°C [Grad Celsius] bis über 750°C [Grad Celsius], vorzugsweise 50°C [Grad Celsius] bis 400°C [Grad Celsius] ganz besonders bevorzugt 50°C [Grad Celsius] für negative Elektroden 4 und 150°C [Grad Celsius] für positive Elektroden 5 im Bereich von Sekunden bis Stunden erwärmt (getempert bzw. gesintert). Dabei wird das enthaltene Lösungsmittel verdampft, bis nur noch die keramische Separatorschicht 6 auf der Elektrode 4, 5 aufgebracht ist. Dieses Tempern bzw. Sintern kann unter Inertgas, wie beispielsweise Stickstoff ($N_2$) oder Argon (Ar), erfolgen. Auf diese Weise werden die Elektrode-Separator-Elemente mechanisch stabil und chemisch resistent gegen das aktive Metall (z. B. Li) und den Elektrolyten (z. B. $SO_2$-basiert). Ferner kann durch das Erwärmen über längere Zeit sichergestellt werden, dass kein Wasser und/oder keine Hydroxylgruppen oder lösliche Schwermetalle in den Elektrode-Separator-Elementen enthalten sind. Zudem sind diese mechanisch stabil gegen und undurchlässig für gegenwachsendes aktives Metall. Ferner erfolgt eine besonders vorteilhafte Verbindung zwischen der keramischen Separatorschicht 6 und der Elektrode 4, 5 des Elektrode-Separator-Elements. Auch werden dadurch keramische Separatorschichten 6 erhalten, die sich im Vergleich zu anderen Herstellungsverfahren dadurch auszeichnen, dass sie keine (Mikro-)Risse 23 aufweisen. Das erfindungsgemäße Elektrode-Separator-Element ist zudem von besonders hoher Oberflächengüte, also von hoher Planparallelität und geringer Oberflächenwelligkeit.

In einer bevorzugten Ausführungsform weist die keramische Separatorschicht 6 Fasern zur Verstärkung auf. Dazu kann die Suspension zum Beschichten der Elektroden 4, 5 zusätzlich Fasern aufweisen; dies können Glasfasern oder Kohlenstofffasern oder Keramikfasern sein. Die Fasern können Nanofasern sein. Die keramische Separatorschicht 6 in einem Elektrode-Separator-Element, das mit einer derart faserverstärkten Separatorschicht 6 ausgebildet ist, hat eine noch höhere Toleranz gegen Durchbiegen bei der Montage. Die Fasern behindern die Rissbildung an Fehlstellen in der keramischen Separatorschicht 6.

Die Separatorschicht 6 kann einen Porendurchmesser besitzen, der einen Transport von aktiven Ionen (z. B. $Li^+$) durch die Separatorschicht 6 ermöglicht, während ein Durchwachsen von aktivem Metall (z. B. metallisches Li) in Form von Metallwhiskern verhindert wird. Dazu kann die Separatorschicht 6 je nach Elektrolyt, angelegter Spannung und Art des aktiven Metalls einen Porendurchmesser von $2\,\mu$m [Mikrometer], bevorzugt $1\,\mu$m [Mikrometer] oder weniger besitzen.

Als besonders günstig, insbesondere zum Erzielen der vorstehenden Vorteile hat es sich erwiesen, dass mindestens eine Komponente der keramischen Separatorschicht 6 in der Suspension als Sol vorliegt. Der Ausdruck "Sol" im Sinne der vorliegenden Erfindung bezeichnet eine kolloidale Lösung in der ein fester oder flüssiger Stoff in feinster Verteilung in einem festen, flüssigen oder gasförmigen Medium dispergiert ist. Vorzugsweise ist im Sol ein fester Stoff in einem flüssigen Medium dispergiert.

Beispielsweise kann die Oberfläche der negativen Elektrode 4 mit einer Suspension aus Silicasol (Levasil, Bayer AG) und 20nm [Nanometer] Aluminiumoxid 20μm [Mikrometer] dick beschichtet und anschließend bei 450°C [Grad Celsius] im Inertgas für eine Dauer von 5 Minuten getempert werden. Oder die Oberfläche der negativen Elektrode 4 kann mit einer Suspension aus Zirkonsol mit 50nm [Nanometer] Zirkondioxid 50μm [Mikrometer] dick beschichtet und anschließend im Inertgas bei 450°C [Grad Celsius] für 5 Minuten getempert werden.

Für die positive Elektrode 5 können ähnliche Beschichtungsverfahren Anwendung finden.

Ein erfindungsgemäßes Elektrode-Separator-Element 4, 6 wie in Figur 3 gezeigt, kann durch Beschichten einer negativen Elektrode 4 mit einer keramischen Separatorschicht 6 nach zuvor beschriebenem Verfahren erhalten werden.

Es kann auch wie in Figur 4 dargestellt eine positive Elektrode 5 statt der negativen Elektrode 4 mit der keramischen Separatorschicht 6 in analoger Weise beschichtet werden, um ein erfindungsgemäßes Elektrode-Separator-Element 5, 6 zu erhalten.

Bei den erfindungsgemäßen Elektrode-Separator-Elementen, kann eine der Hauptflächen der positiven und/oder negativen Elektroden 4, 5 (nicht dargestellt) oder beide Hauptflächen beschichtet werden (vgl. Fig. 3-4).

Bei einer erfindungsgemäßen Beschichtung der negativen Elektroden 4 und/oder der positiven Elektroden 5 kann eine ausreichend planparallele und nicht-wellige Oberfläche, also eine Oberfläche ausreichender Oberflächengüte, der Elektroden 4, 5 mit der keramischen Separatorschicht 6 beschichtet werden, so dass bei der Montage (Stapeln/Zusammenfügen) der Elektrode-Separator-Elemente keine Durchbiegungen auftreten, die zu einer (Mikro-)Rissbildung in der Separatorschicht 6 führen.

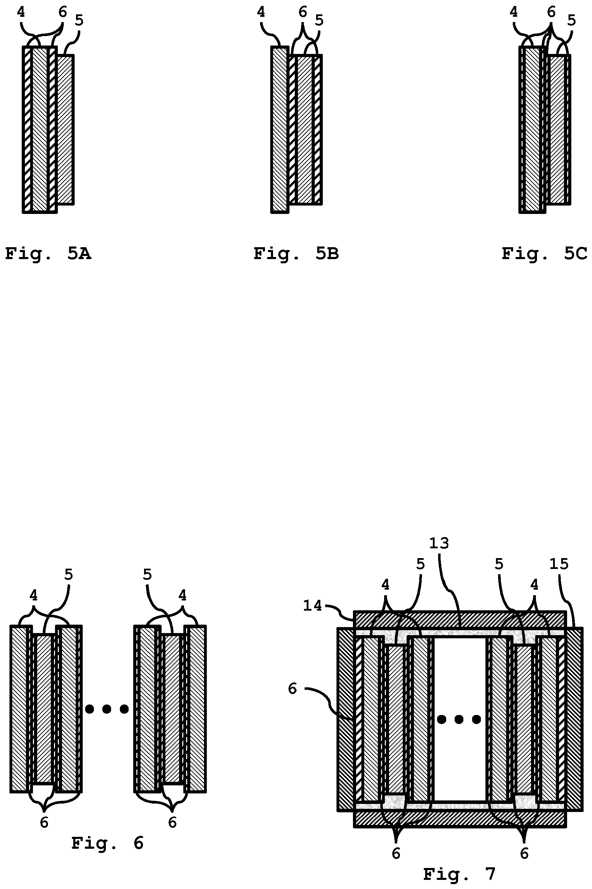

Wie in Figur 5A schematisch dargestellt, können negative Elektroden 4 mit beidseitig aufgebrachter keramischer Separatorschicht 6 (negative Elektrode-Separator-Elemente 4, 6) und unbeschichtete positive Elektroden 5 in wechselweiser Anordnung zu einem Stapel gestapelt und zusammengefügt (montiert) werden.

Alternativ können auch, wie in Figur 5B schematisch dargestellt, positive Elektroden 5 mit beidseitig aufgebrachter keramischer Separatorschicht 6 (positive Elektrode-Separator-Elemente 5, 6) und unbeschichtete negative Elektroden 4 in wechselweiser Anordnung zu einem Stapel gestapelt und zusammengefügt (montiert) werden.

Es ist ebenfalls möglich einseitig mit keramischer Separatorschicht 6 beschichtete negative Elektroden 4 (negative einseitige Elektrode-Separator-Elemente 4, 6) und einseitig mit keramischer Separatorschicht 6 beschichtete positive Elektroden 5 (positive einseitige Elektrode-Separator-Elemente 5, 6) wechselweise derart zu stapeln und zusammenzufügen (zu montieren), dass in dem resultierenden Stapel zwischen je einer negativen Elektrode 4 und einer positiven Elektrode 5 eine einzige keramische Separatorschicht 6 angeordnet ist (nicht dargestellt).

Ferner ist es möglich, wie in Figur 5C schematisch dargestellt, negative Elektroden 4 mit beidseitig aufgebrachter keramischer Separatorschicht 6 (negative Elektrode-Separator-Elemente 4, 6) und positive Elektroden 5 mit beidseitig aufgebrachter keramischer Separatorschicht 6 (positive Elektrode-Separator-Elemente 5, 6) zu Stapeln zu stapeln und zusammenzufügen (zu montieren), sodass keramische Separatorschichten aneinander anliegen. Dabei ist zum einen die gegenseitige Planparallelität der aufeinanderliegenden Oberflächen in dem Stapel besonders hoch, da ausschließlich Oberflächen von Separatorschichten 6 aufeinander liegen. Zum anderen ist die Betriebssicherheit von elektrochemischen Batteriezellen mit solch einem Stapel besonders hoch, da selbst wenn eine Separatorschicht 6 Risse ausbilden sollte, immer noch eine zweite intakte Schicht auf der Gegenseite vorhanden ist.

Wie in Figur 6 schematisch dargestellt ist, kann ein Stapel in einer Batteriezelle mehrere negative Elektroden 4 und mehrere positive Elektroden 5 aufweisen, die abwechselnd gestapelt vorliegen. In einer bevorzugten Ausführungsform kann je eine negative Elektrode 4 als äußerste Elektrode am jeweiligen Ende eines so gebildeten Stapels angeordnet sein. Dies ist vorteilhaft, da sonst die äußeren positiven Elektroden 5 für ihre Kapazität an Lithium-Ionen nur eine "halbe" negative Elektrode 4 innenliegend als aufnehmende Elektrode zu Verfügung hätten. Eine solcher Stapel für Batteriezellen kann mindestens drei Elektroden, beispielsweise mindestens zwei negativen Elektroden 4 und mindestens einer positiven Elektrode 5, die abwechselnd angeordnet sind, aufweisen und ist dem Fachmann an sich bekannt. Aus Figur 6 ist ersichtlich, dass sich Separatorschichten 6 auf beiden Hauptflächen der sowohl negativen Elektroden 4 als auch auf beiden Hauptflächen der positiven Elektroden 5 befinden. Die negativen Elektrode-Separator-Elemente 4, 6 und die positiven Elektrode-Separator-Elemente 5, 6 sind einander gegenüberliegend angeordnet. Die hohe Oberflächengüte der keramischen Separatorschichten 6 und der Elektroden 4, 5, also deren hohe Planparallelität und geringe Oberflächenwelligkeit ermöglicht es, dass der Stapel montiert, also gestapelt und/oder zusammengefügt, werden kann, ohne dass Risse und/oder Mikrorisse 23 in den keramischen Separatorschichten 6 entstehen.

Wie Figur 7 zu entnehmen ist, kann die Batteriezelle eine Isolatorschicht 13 auf allen oberen und/oder unteren Flächen und/oder allen ersten und/oder zweiten Seitenflächen der negativen Elektrode-Separator-Elemente 4, 6 und der positiven Elektrode-Separator-Elemente 5, 6 des Stapels aufweisen. Diese Isolatorschicht 13 bewirkt die elektronische Isolierung der Elektroden von dem Gehäuse. Die Isolatorschicht 13 kann starr, d. h. nicht biegbar, sein. Sie kann aus den Materialien hergestellt sein, wie sie vorstehend in Zusammenhang mit der keramischen Separatorschicht 6 beschrieben sind. Das Material der weiteren Isolatorschicht 13 kann gleich oder verschieden von dem konkret verwendeten Material der keramischen Separatorschicht 6 sein. Wenn für die weitere Isolatorschicht 13 ein anderes Material als das für die keramische Separatorschicht 6 verwendete eingesetzt wird, dann sollte es so gewählt sein, dass es ebenfalls bei niedrigen Temperaturen gesintert werden kann, wie dies vorstehend in Zusammenhang mit der keramischen Separatorschicht 6 beschrieben wurde.

Wie Figur 7 weiterhin zu entnehmen ist, können die negativen Elektrode-Separator-Elemente 4, 6, die positiven Elektrode-Separator-Elemente 5, 6, und ggf. die weitere Isolatorschicht 13 allseitig mit einem ersten gewickelten keramischen Isolator 14 und einem zweiten gewickelten keramischen Isolator 15 umwickelt sein. Die beiden äußersten Elektroden des Stapels können dabei jeweils auf ihren äußeren Hauptflächen, also den Hauptflächen zum Gehäuse hin, eine Separatorschicht 6 aufweisen. Das Material für den ersten und den zweiten gewickelten keramischen Isolator 14, 15 kann dabei aus den gleichen Materialien ausgewählt werden, wie sie vorstehend für die keramische Separatorschicht 6 angegeben sind, die günstiger Weise zur Erreichung der erforderlichen Flexibilität auf ein an sich bekanntes Glasgewebe aufgebracht sein können. Die Umwicklung mit dem ersten und zweiten gewickelten keramischen Isolator 14, 15 kann dabei so erfolgen, dass sie in unterschiedliche Richtungen gewickelt werden, wobei die beiden Wickelrichtungen senkrecht zueinander stehen können. Beispielsweise kann der erste keramische Isolator 14 von oben nach unten, also vertikal und der zweite keramische Isolator 15 dazu senkrecht, also horizontal gewickelt werden.

Die negativen und positiven Elektroden 4, 5 können in einer Halterung zu einem Stapel gestapelt werden (vgl. Fig. 6-7), wobei je eine negative Elektrode 4 die erste und letzte Elektrode in dem Stapel bilden kann. Die Flächen des Stapels können mit einem feinkörnigen inerten Material (z. B. 10 μm [Mikrometer] Aluminiumoxid) mit anorganischem oder mit organischem Binder, wie THV (Dyneon THV™ FP (polymer of tetrafluoroethylene, hexafluoropropylene and vinylidene fluoride)), oder auch ohne Binder beschichtet werden. Die Beschichtung kann dabei mittels einer Paste, die das anorganische Material, gegebenenfalls den Binder und ein leicht flüchtiges organisches Lösungsmittel enthält, aufgebracht werden. Der an den Flächen beschichtete Stapel kann schließlich vorzugsweise allseitig mit einem oder mehreren flexiblen keramischen Isolatoren 14, 15 umwickelt (vgl. Fig. 7) und in das Gehäuse eingebracht werden.

Ferner können jeweils ein oder mehrere unterschiedliche Schichten der diversen Isolatoren 13, 14 und 15 aufgebracht werden. Die Schichten können auch Fasern/Nanofasern (z. B. Glas-, Polymer-, Keramikfasern, etc.) zur Erhöhung der Festigkeit enthalten.

Um Sicherheitsprobleme weiter zu minimieren, kann das Kopfvolumen 11 mit einem inerten körnigen Material, z.B. mit feinkörnigem Siliziumdioxid mit oder ohne Binder befüllt sein.

Die Befüllung der Batteriezelle mit dem flüssigen Elektrolyten erfolgt vorzugsweise mit einer Pumpe durch eine Öffnung von unten. Die Temperatur der Batteriezelle und des Elektrolyten kann dabei vorzugsweise unterhalb der Siedetemperatur des Elektrolyten liegen. Die Elektrolytmenge ist vorzugsweise so bemessen, dass das Kopfvolumen nicht befüllt wird.

Mehrere Batteriezellen können zu einem Modul in einem äußeren Gehäuse verschaltet werden. Um eine möglichst hohe mechanische Stabilität zu erhalten, werden die Batteriezellen in eine Form vorzugsweise mit Distanzhaltern zwischen den Batteriezellen und zu der Wand der Form eingebracht. Sollten die Batteriezellen im Modul aktiv gekühlt werden, können Kühlschlangen eingebracht und auch als Distanzhalter verwendet werden. Nach der elektrischen Verschaltung der Batteriezellen und gegebenenfalls der Montage der Modulelektronik wird die Form mit einer Vergussmasse, z. B. Epoxidharz gegebenenfalls mit Glasgewebe oder Glasfasern, verfüllt. Dabei werden auch die Pole 8, 10 mit vergossen, lediglich die Berstscheiben 12 bleiben frei.

Die vorliegende Erfindung wird nachfolgend unter Bezugnahme auf die folgenden Beispiele erläutert, ohne sie dabei aber darauf zu beschränken.

Erste Ausführungsform:

In einen Nickelschaum mit einer Dicke von ca. 1,6mm [Millimeter] und einem mittleren Porendurchmesser von ca. 300 μm [Mikrometer] wird eine Paste aus Graphit und organischem Lösungsmittel (Isopropanol) eingebracht. Nach Entfernen des Lösungsmittels wird der Graphit enthaltende Nickelschaum auf eine vorgegebene Porosität des Graphits von 30% [Prozent] und eine Dicke von 0,5 mm [Millimeter] gewalzt.

Die Oberflächen der Hauptflächen werden mit einer Suspension aus Silicasol (Levasil, Bayer AG) und 20nm [Nanometer] Aluminiumoxid 20 μm [Mikrometer] dick beschichtet und anschließend bei 450°C [Grad Celsius] im Inertgas Argon für 20 Minuten getempert.

Zweite Ausführungsform: Elektrode mit Separatorschicht

Die zweite Ausführungsform wird wie die erste Ausführungsform durchgeführt, wobei die Oberflächen der Hauptflächen mit einer Suspension aus Zirkonsol mit 50nm [Nanometer] Zirkondioxid 50 μm [Mikrometer] dick beschichtet und anschließend im Inertgas Argon bei 450°C [Grad Celsius] 20 Minuten getempert werden.

Der Stapel kann mit den negativen Elektroden 4 zusammen mit den keramischen Separatorschichten 6 und den positiven Elektroden 5 allseitig mit einem ersten gewickelten flexiblen keramischen Isolator 14 und mit einem zweiten gewickelten flexiblen keramischen Isolator 15 umwickelt sein (nicht dargestellt). Das Material für den ersten und zweiten gewickelten keramischen Isolator 14, 15 kann dabei bis auf die Korngröße aus den gleichen Materialien ausgewählt werden, wie sie vorstehend für die keramische Separatorschicht 6 angegeben sind, die günstiger Weise zur Erreichung der erforderlichen Flexibilität auf ein an sich bekanntes Glasgewebe aufgebracht sein können. Die Umwicklung mit dem ersten und zweiten keramischen Isolator 14, 15 kann dabei so erfolgen, dass sie in unterschiedliche Richtungen gewickelt werden, wobei optional die beiden Wickelrichtungen senkrecht zueinander stehen. Beispielsweise kann der erste gewickelte keramische Isolator 14 vertikal und der zweite keramische Isolator 15 dazu horizontal gewickelt werden.

Dabei können durchaus ein oder mehrere unterschiedliche Schichten der diversen Isolatoren 14 und 15 aufgebracht werden. Die Schichten können auch Fasern bzw. Nanofasern enthalten.

In einer bevorzugten Ausführungsform in der erfindungsgemäßen Batterie ein schwefeldioxidhaltiger Elektrolyt verwendet werden, welcher in der deutschen Patentanmeldung DE 10 2016 106 947.7 beschrieben ist. Ein solcher schwefeldioxidhaltiger Elektrolyt umfasst zumindest ein erstes Leitsalz mit der stöchiometrischen Formel K(ASX2)p, wobei K für ein Kation aus der Gruppe der Alkalimetalle (insbesondere Li, Na, K, Rb, Cs) oder der Erdalkalimetalle (insbesondere Be, Mg, Ca, Sr, Ba) oder der Zinkgruppe (d.h. der zwölften Gruppe des Periodensystems, insbesondere Zn, Cd, Hg) ist. In dem Fall, dass K aus der Gruppe der Alkalimetalle gewählt ist, ist p=1. In dem Fall, dass K aus der Gruppe der Erdalkalimetalle oder aus der Zinkgruppe gewählt ist, ist p=2. Die Abkürzung A steht für ein Element aus der dritten Hauptgruppe des Periodensystems, insbesondere Bor, Aluminium, Gallium, Indium, Thallium, und die Abkürzung X für ein Halogen, insbesondere Fluor, Chlor, Brom, Jod. S steht für Schwefel. Es ist bevorzugt, dass K für Li steht. Besonders bevorzugt ist es, dass das erste Leitsalz die stöchiometrische Formel LiAlSCl2 hat, d.h. das erste Leitsalz ist bevorzugt Lithiumsulfodichloroaluminat.

Der Elektrolyt kann das in Schwefeldioxid gelöste erste Leitsalz als "SO2-haltigen" Elektrolyten enthalten. Mit diesem Begriff wird hier ein Elektrolyt bezeichnet, der Schwefeldioxid nicht als Zusatz in geringer Konzentration enthält, sondern bei dem die Beweglichkeit der Ionen des ersten Leitsalzes, das in dem Elektrolyten enthalten ist und den Ladungstransport bewirkt, zumindest teilweise durch das SO2 gewährleistet ist.

Ein Vorteil dieses nichtwässrigen anorganischen SO2-haltigen Elektrolyten ist, dass das erste Leitsalz nicht in einer chemischen Weiterreaktion zu schwerlöslichen Salzen abreagiert. Somit wird vermieden, dass die Poren der porösen Separatoren in der Batteriezelle durch ausfallende schwerlösliche Salze verstopft werden und infolge dessen durch den Druck von gegenwachsendem Lithium Risse bilden oder sogar abplatzen.

Der Elektrolyt ist vorzugsweise im Wesentlichen frei von organischen Materialien, wobei "im Wesentlichen" dahingehend zu verstehen ist, dass die Menge eventuell vorhandener organischer Materialien so gering ist, dass sie keinerlei Sicherheitsrisiko darstellen.

Zusätzlich zu dem ersten Leitsalz kann der schwefeldioxidhaltige Elektrolyt in einer bevorzugten Ausführungsform weiterhin ein zweites Leitsalz mit der stöchiometrischen Formel K(AX4)p und/oder ein drittes Leitsalz mit der stöchiometrischen Formel K(AOX2)p umfassen. Das zweite Leitsalz und bzw. oder das dritte Leitsalz sind vorzugsweise in SO2 gelöst. Für die hier angegebenen abkürzenden Buchstaben K, A, X und p können Elemente gemäß der oben beschriebenen Wahlmöglichkeiten eingesetzt werden. Es ist bevorzugt, aber nicht notwendig, dass dabei für alle verwendeten Leitsalze die gleichen Elemente ausgewählt werden. O steht für Sauerstoff.

Insbesondere ist eine Ausführungsform bevorzugt, in der der schwefeldioxidhaltige Elektrolyt frei ist von Substanzen mit der stöchiometrischen Formel KAX4, insbesondere frei von LiAlCl4 ist, wobei die angegebenen abkürzenden Buchstaben K, A und X wiederum Elemente gemäß der oben beschriebenen Elementgruppen sind. Es ist bevorzugt, dass der schwefeldioxidhaltige Elektrolyt frei ist von allen Substanzen, die die stöchiometrische Formel KAX4 in irgendeiner Kombination von für die abkürzenden Buchstaben oben beschriebenen einsetzbaren Elementen erfüllen. Alternativ ist es bevorzugt, dass der schwefeldioxidhaltige Elektrolyt zumindest frei ist von der Substanz mit der stöchiometrischen Formel KAX4, die sich durch Einsetzen derjenigen Elemente ergibt, die für das erste Leitsalz gewählt wurden.

Wenn eine Substanz KAX4, insbesondere LiAlCl4, nicht in dem Elektrolyten vorhanden ist, bilden sich keine schwerlöslichen bzw. ausfallenden Salze. Folglich werden die Poren der Separatoren in der Batteriezelle nicht durch ausfallende, schwerlösliche Salze (wie Lithiumchlorid) verstopft und somit eine Rissbildung bzw. ein Abplatzen der Separatoren verhindert.

Weiterhin ist bei diesem Elektrolyten das Gleichgewicht von Lithiumdithionit zu Salzen im Wesentlichen schon bei der Herstellung des Elektrolyten eingestellt worden, sodass in der Batteriezelle nur noch sehr wenige oder keine Feststoffe mehr ausfallen, welche die Poren der Separatorschicht verstopfen könnten oder an der Oberfläche der negativen Elektrode ausfallen und damit eine ungleichmäßige Volumenzunahme und/oder ein Absprengen der Separatorschicht bewirken könnten. Ein solcher Elektrolyt eignet sich damit ganz besonders für die Verwendung in einer wiederaufladbaren Batteriezelle mit dem oben beschriebenen Elektrode-Separator-Element.

In einer bevorzugten Ausführungsform umfasst der Elektrolyt zumindest ein erstes Leitsalz mit der stöchiometrischen Formel K(ASX2)p, wobei K für ein Kation aus der Gruppe der Alkalimetalle mit p=1, der Erdalkalimetalle mit p=2 oder der Zinkgruppe mi p=2 steht, wobei A für ein Element aus der dritten Hauptgruppe steht, S für Schwefel und X für ein Halogen steht, und wobei das erste Leitsalz in Schwefeldioxid gelöst ist. Das erste Leitsalz kann dabei insbesondere die stöchiometrische Formel LiAlSCl2 haben.

BEZUGSZEICHENLISTE:

| | |
|---|---|
| 1 | Seitengehäuse |
| 2 | Boden |
| 3 | Deckel |
| 4 | negative Elektrode |
| 5 | positive Elektrode |
| 6 | keramische Separatorschicht |
| 7 | negatives Ableitelement (für die negative Elektrode 4) |
| 8 | negativer Pol mit Glasdurchführung (für das negative Ableitelement 7) |
| 9 | positives Ableitelement (für die positive Elektrode 5) |
| 10 | positiver Pol mit Glasdurchführung (für das positive Ableitelement 9) |
| 11 | Zwischenraum (Kopfvolumen) 10 |
| 12 | Berstscheibe |
| 13 | Isolatorschicht |
| 14 | erster gewickelter flexibler keramischer Isolator |
| 15 | zweiter gewickelter flexibler keramischer Isolator |

**Patentansprüche**

1. Elektrode-Separator-Element für elektrochemische Batteriezellen mit einem $SO_2$-haltigen Elektrolyten, umfassend

   - eine starre Elektrode (4, 5), die eine aktive Masse umfasst, und
   - eine keramische Separatorschicht (6),

   **dadurch gekennzeichnet, dass**

   die Oberflächen des Elektrode-Separator-Elements planparallel zueinander sind, sodass eine Rissbildung in der Separatorschicht (6) bei einem Stapeln des Elektrode-Separator-Elements oder einem Zusammenfügen zu einem Stapel verhindert wird, und wobei die Planparallelität der Elektrode über die Fläche der Elektrode betragsmäßig Höhenunterschiede von maximal 10% der Dicke der Elektrode aufweist.

2. Elektrode-Separator-Element nach Anspruch 1, wobei die Planparallelität der Elektrode betragsmäßig maximal Höhenunterschiede von 4% der Dicke der Elektrode (4, 5) aufweist..

3. Elektrode-Separator-Element nach einem der vorhergehenden Ansprüche, wobei die Schichtdicke der Separatorschicht (6) weniger als $200\mu$m [Mikrometer] oder bevorzugt $10\mu$m [Mikrometer] bis $20\mu$m [Mikrometer] beträgt.

4. Elektrode-Separator-Element nach einem der vorhergehenden Ansprüche, wobei die Separatorschicht (6) einen Porendurchmesser von weniger als 1 Mikrometer aufweist, sodass ein Transport von aktiven Ionen durch die Separatorschicht (6) ermöglicht und ein Durchwachsen von aktivem Metall verhindert wird.

5. Elektrode-Separator-Element nach einem der vorhergehenden Ansprüche, wobei die Separatorschicht (6) Silikate, Aluminiumoxid, Zirkonoxid, Titanoxid, Carbide, Nitride oder Molybdänsilizid umfasst.

6. Elektrode-Separator-Element nach einem der vorhergehenden Ansprüche, wobei ein Träger der Elektrode (4, 5) ein Metallschaum ist.

7. Elektrode-Separator-Element nach Anspruch 6, wobei der Metallschaum aus Fe, Co, Ni, Mn, Cr, W, V. Ti, Mo, Zr, Al, Cu, Zn, Ag oder einer Legierung daraus hergestellt ist.

8.  Elektrode-Separator-Element nach einem der vorhergehenden Ansprüche, wobei die aktive Masse Graphit ($C_6$) ist.

9.  Stapel für elektrochemische Batteriezellen umfassend mindestens eine negative Elektrode (4) und mindestens eine positive Elektrode (5), insgesamt jedoch mindestens drei Elektroden 4, 5, mit dazwischen angeordneter keramischer Separatorschicht (6), die wechselweise übereinander gestapelt und zusammengefügt sind, wobei mindestens ein negatives Elektrode-Separator-Element (4, 6) und/oder mindestens ein positives Elektrode-Separator-Element (5, 6) nach einem der vorhergehenden Ansprüche in dem Stapel enthalten ist.

10.  Elektrochemische Batteriezelle, umfassend einen $SO_2$-haltigen Elektrolyt und mindestens ein Elektrode-Separator-Element nach einem der Ansprüche 1 bis 8 oder einen Stapel nach Anspruch 9.

11.  Elektrochemische Batteriezelle nach Anspruch 10, wobei der SO2-haltige Elektrolyt zumindest ein erstes Leitsalz mit der stöchiometrischen Formel K(ASX2)p umfasst, wobei K für ein Kation aus der Gruppe der Alkalimetalle mit p=1, der Erdalkalimetalle mit p=2 oder der Zinkgruppe mit p=2 steht, wobei A für ein Element aus der dritten Hauptgruppe steht, S für Schwefel und X für ein Halogen steht, und wobei das erste Leitsalz in Schwefeldioxid gelöst ist.

12.  Elektrochemische Batteriezelle nach einem der Ansprüche 10-11, wobei eine Konzentration des ersten Leitsalzes in dem Schwefeldioxid zumindest $10^{-4}$ mol/l beträgt.

13.  Elektrochemische Batteriezelle nach einem der Ansprüche 10-12, wobei das erste Leitsalz die stöchiometrische Formel LiAlSCl2 hat.

14.  Batteriezelle nach einem der Ansprüche 10-13, weiterhin umfassend ein Gehäuse (1, 2, 3), wobei sich zwischen oberen Flächen der Elektroden (4, 5) und einer unteren Fläche eines Deckels (3) ein Zwischenraum (11) befindet.

**Claims**

1.  Electrode separator element for electrochemical battery cells having a $SO_2$-containing electrolyte, comprising

    - a rigid electrode (4, 5) which comprises an active mass, and
    - a ceramic separator layer (6),

    **characterized in that**

    the surfaces of the electrode separator element are plane-parallel to one another such that cracks are prevented from forming in the separator layer (6) when the electrode separator element is stacked or connected to form a stack, and
    the plane parallelism of the electrode over the surface of the electrode having height differences of a maximum of 10% of the thickness of the electrode.

2.  Electrode separator element according to claim 1, wherein the plane parallelism of the electrode has maximum height differences of 4% of the thickness of the electrode (4, 5).

3.  Electrode separator element according to either of the preceding claims, wherein the layer thickness of the separator layer (6) is less than 200 $\mu$m [micrometers] or preferably 10 $\mu$m [micrometers] to 20 $\mu$m [micrometers].

4.  Electrode separator element according to any of the preceding claims, wherein the separator layer (6) has a pore diameter of less than 1 micrometer such that active ions can be transported through the separator layer (6) and active metal is prevented from growing therethrough.

5.  Electrode separator element according to any of the preceding claims, wherein the separator layer (6) comprises silicates, aluminum oxide, zirconium oxide, titanium oxide, carbides, nitrides or molybdenum silicide.

6.  Electrode separator element according to any of the preceding claims, wherein a carrier of the electrode (4, 5) is a metal foam.

7. Electrode separator element according to claim 6, wherein the metal foam is made of Fe, Co, Ni, Mn, Cr, W, V, Ti, Mo, Zr, Al, Cu, Zn, Ag or an alloy thereof.

8. Electrode separator element according to any of the preceding claims, wherein the active mass is graphite ($C_6$).

9. Stack for electrochemical battery cells comprising at least one negative electrode (4) and at least one positive electrode (5), but a total of at least three electrodes 4, 5, with a ceramic separator layer (6) arranged therebetween, which negative and positive electrodes are alternately stacked one on top of the other and connected, wherein at least one negative electrode separator element (4, 6) and/or at least one positive electrode separator element (5, 6) according to any of the preceding claims is contained in the stack.

10. Electrochemical battery cell comprising a $SO_2$-containingelectrolyte and at least one electrode separator element according to any of claims 1 to 8 or a stack according to claim 9.

11. Electrochemical battery cell according to claim 10, wherein the $SO_2$-containing electrolyte comprises at least one first conducting salt having the stoichiometric formula K(ASX2)p, where K represents a cation from the group of alkali metals with p=1, the group of alkaline earth metals with p=2 or the zinc group with p=2, where A represents an element from the third main group, S represents sulfur and X represents a halogen, and wherein the first conducting salt is dissolved in sulfur dioxide.

12. Electrochemical battery cell according to either claim 10 or claim 11, wherein a concentration of the first conducting salt in the sulfur dioxide is at least $10^{-4}$ mol/l.

13. Electrochemical battery cell according to any of claims 10 to 12, wherein the first conducting salt has the stoichiometric formula LiAlSCl2.

14. Battery cell according to any of claims 10 to 13, further comprising a housing (1, 2, 3), wherein a gap (11) is located between upper surfaces of the electrodes (4, 5) and a lower surface of a cover (3).

**Revendications**

1. Unité-électrode-séparateur pour cellules de batterie électrochimiques comportant un électrolyte contenant du $SO_2$, comprenant

   - une électrode rigide (4, 5) qui comprend une masse active, et
   - un séparateur en céramique (6),

   **caractérisée en ce que**

   les surfaces de l'unité-électrode-séparateur sont planes et parallèles les unes par rapport aux autres, de manière à empêcher une fissuration dans la couche de séparation (6) lorsque l'unité-électrode-séparateur est empilée ou lorsqu'elle est assemblée pour former un empilement, et
   le parallélisme plan de l'électrode sur la surface de l'électrode présentant des différences de hauteur d'une valeur ne dépassant pas 10 % de l'épaisseur de l'électrode.

2. Unité-électrode-séparateur selon la revendication 1, dans laquelle le parallélisme plan de l'électrode présente des différences de hauteur d'une valeur ne dépassant pas 4 % de l'épaisseur de l'électrode (4, 5).

3. Unité-électrode-séparateur selon l'une des revendications précédentes, dans laquelle l'épaisseur de couche du séparateur (6) est inférieure à 200 $\mu$m [micromètres] ou de préférence de 10 $\mu$m [micromètres] à 20 $\mu$m [micromètres].

4. Unité-électrode-séparateur selon l'une des revendications précédentes, dans lequel le séparateur (6) présente un diamètre de pores inférieur à 1 micromètre, de manière à permettre un transport d'ions actifs à travers le séparateur (6) et à empêcher une intrusion de métal actif.

5. Unité-électrode-séparateur selon l'une des revendications précédentes, dans lequel le séparateur (6) comprend des silicates, de l'oxyde d'aluminium, de l'oxyde de zirconium, de l'oxyde de titane, des carbures, des nitrures ou du siliciure de molybdène.

6. Unité-électrode-séparateur selon l'une des revendications précédentes, dans lequel un support de l'électrode (4, 5) est une mousse métallique.

7. Unité-électrode-séparateur selon la revendication 6, dans lequel la mousse métallique est constituée de Fe, Co, Ni, Mn, Cr, W, V, Ti, Mo, Zr, Al, Cu, Zn, Ag ou d'un alliage de ceux-ci.

8. Unité-électrode-séparateur selon l'une des revendications précédentes, dans lequel la masse active est du graphite ($C_6$).

9. Empilement pour cellules de batterie électrochimiques comprenant au moins une électrode négative (4) et au moins une électrode positive (5), mais au total au moins trois électrodes (4, 5) entre lesquelles est disposée un séparateur (6) en céramique, et qui sont alternativement empilées et assemblées les unes sur les autres, au moins une unité-électrode-séparateur négative (4, 6) et/ou au moins une unité-électrode-séparateur positive (5, 6) selon l'une des revendications précédentes étant contenue dans l'empilement.

10. Cellule de batterie électrochimique comprenant un électrolyte contenant du $SO_2$ et au moins une unité-électrode-séparateur selon l'une des revendications 1 à 8 ou un empilement selon la revendication 9.

11. Cellule de batterie électrochimique selon la revendication 10, dans laquelle l'électrolyte contenant du $SO_2$ comprend au moins un premier sel conducteur de formule stœchiométrique K(ASX2)p, K représentant un cation du groupe des métaux alcalins avec p = 1, des métaux alcalino-terreux avec p = 2 ou du groupe zinc avec p = 2, A représentant un élément du troisième groupe principal, S représentant le soufre et X représentant un halogène, et le premier sel conducteur étant dissous dans du dioxyde de soufre.

12. Cellule de batterie électrochimique selon l'une des revendications 10 à 11, dans laquelle une concentration du premier sel conducteur dans le dioxyde de soufre est d'au moins $10^{-4}$ mol/l.

13. Cellule de batterie électrochimique selon l'une des revendications 10 à 12, dans laquelle le premier sel conducteur est de formule stœchiométrique LiAlSCl2.

14. Cellule de batterie selon l'une des revendications 10 à 13, comprenant en outre un boîtier (1, 2, 3), un espace intermédiaire (11) étant situé entre les surfaces supérieures des électrodes (4, 5) et une surface inférieure d'un couvercle (3).

Fig. 1

Fig. 2

Fig. 3

Fig. 4

Fig. 5A

Fig. 5B

Fig. 5C

Fig. 6

Fig. 7

**EP 3 560 009 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013112385
- EP 2360772 A
- US 20130189566 A
- DE 10347570
- US 20080241674 A
- US 20090181292 A
- US 4362794 A
- WO 2015067795 A1
- WO 9915262 A
- WO 0079631 A

- DE 102016106947
- DE 10055610 A1
- DE 10142622 A1
- DE 10208280 A1
- DE 10238944 A1
- DE 10238943 B4
- DE 10255123 A1
- DE 10255122 A1
- DE 10128970 A1